(19) **Europäisches Patentamt / European Patent Office / Office européen des brevets**

(11) **EP 4 535 488 A1**

(12) **EUROPEAN PATENT APPLICATION**
published in accordance with Art. 153(4) EPC

(43) Date of publication:
09.04.2025 Bulletin 2025/15

(21) Application number: 23816109.5

(22) Date of filing: 31.05.2023

(51) International Patent Classification (IPC):
$H01M\ 10/0562\ ^{(2010.01)}$  $H01M\ 10/052\ ^{(2010.01)}$
$H01M\ 10/0585\ ^{(2010.01)}$

(52) Cooperative Patent Classification (CPC):
H01M 10/052; H01M 10/0562; H01M 10/0585;
Y02E 60/10; Y02P 70/50

(86) International application number:
PCT/JP2023/020288

(87) International publication number:
WO 2023/234352 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.06.2022 JP 2022089965

(71) Applicants:
• FUJIFILM Corporation
Tokyo 106-8620 (JP)
• Institute of Science Tokyo
Tokyo 152-8550 (JP)

(72) Inventors:
• SHIRATORI, Yosuke
Ashigarakami-gun, Kanagawa 258-8577 (JP)
• WATANABE, Kenta
Ashigarakami-gun, Kanagawa 258-8577 (JP)
• SAITO, Kengo
Ashigarakami-gun, Kanagawa 258-8577 (JP)
• YASUI, Shintaro
Tokyo 152-8550 (JP)
• TOKAIRIN, Masatoshi
Ashigarakami-gun, Kanagawa 258-8577 (JP)
• OKUNO, Yukihiro
Ashigarakami-gun, Kanagawa 258-8577 (JP)

(74) Representative: HGF
HGF Limited
1 City Walk
Leeds LS11 9DX (GB)

(54) **ALL-SOLID-STATE LITHIUM-ION SECONDARY BATTERY AND METHOD FOR MANUFACTURING ALL-SOLID-STATE LITHIUM-ION SECONDARY BATTERY**

(57) Provided are an all-solid-state lithium ion secondary battery including, in the following order, a positive electrode layer, a solid electrolyte layer, and a negative electrode layer, in which the solid electrolyte layer contains an amorphous solid electrolyte which contains a lithium-containing oxide containing Li, B, and O and a lithium salt, in the amorphous solid electrolyte, a value of a ratio of a content of the lithium salt to a content of the lithium-containing oxide is 0.001 to 1.5 in terms of a molar ratio, and moisture contained in a laminate consisting of a positive electrode active material layer, the solid electrolyte layer, and a negative electrode active material layer is in a specific state; and a manufacturing method of the all-solid-state lithium ion secondary battery.

FIG. 1

**Description**

## BACKGROUND OF THE INVENTION

1. Field of the Invention

The present invention relates to an all-solid-state lithium ion secondary battery and a manufacturing method of an all-solid-state lithium ion secondary battery.

2. Description of the Related Art

In the related art, a liquid electrolyte having high ion conductivity has been used in a lithium ion secondary battery. However, since the liquid electrolyte is flammable, there is a problem in safety. In addition, since the organic solvent is liquid, it is difficult to make the battery compact, and there is also a problem of limitation on capacity in a case where the battery is large.

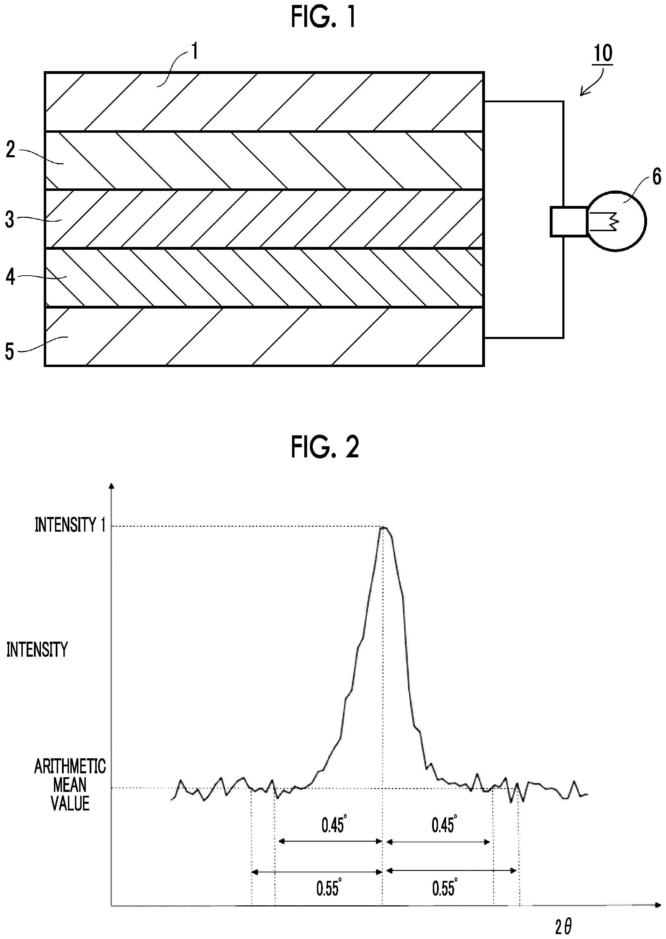

On the other hand, an all-solid-state lithium ion secondary battery is one of the next-generation batteries which can solve these problems. Fig. 1 shows a basic configuration of the all-solid-state lithium ion secondary battery. An all-solid-state lithium ion secondary battery 10 includes a negative electrode collector 1, a negative electrode active material layer 2, a solid electrolyte layer 3, a positive electrode active material layer 4, and a positive electrode collector 5 in this order as viewed from the negative electrode side. The respective layers are in contact with each other to form an adjacent structure. By adopting such a structure, during charging, electrons ($e^-$) are supplied to the negative electrode side, and lithium ions ($Li^+$) which have moved through the solid electrolyte layer 3 are accumulated in the negative electrode. On the other hand, during discharging, lithium ions ($Li^+$) accumulated in the negative electrode are returned to the positive electrode side through the solid electrolyte layer 3, and electrons are supplied to an operation portion 6. In the illustrated example, an electric bulb is employed as a model of the operation portion 6, and is lit by the discharging.

As described above, in the all-solid-state lithium ion secondary battery, in order to obtain desired charging and discharging characteristics, the solid electrolyte layer is required to have excellent lithium ion conductivity.

As a solid electrolyte constituting the solid electrolyte layer, a sulfide-based solid electrolyte or an oxide-based solid electrolyte is mainly used.

Since the sulfide-based solid electrolyte is soft and plastically deformed, particles are bonded only by pressure molding. Therefore, the sulfide-based solid electrolyte has a low interface resistance between particles and excellent ion conductivity. However, the sulfide-based solid electrolyte has a problem in that it reacts with water to generate toxic hydrogen sulfide.

On the other hand, the oxide-based solid electrolyte has an advantage of high safety. However, the oxide-based solid electrolyte is hard and is not easily plastically deformed. In order to improve bonding property between particles of the oxide-based solid electrolyte, a high-temperature sintering treatment is required, which is restricted from the viewpoint of production efficiency of the battery, energy cost, and the like. For example, JP2018-052755A discloses a solid electrolyte formed of a lithium-containing oxide having a specific element composition, and it discloses that the solid electrolyte exhibits high ion conductivity. However, in order to use the lithium-containing oxide as a solid electrolyte sheet, a high-temperature sintering treatment is required.

As a technique for dealing with the problem, for example, WO2021/193204A discloses a composite body containing a lithium compound having a lithium ion conductivity of $1.0 \times 10^{-6}$ S/cm or more at 25°C, and lithium tetraborate in which a reduced pair distribution function G(r) obtained from an X-ray total scattering measurement exhibits a specific profile. According to the technique disclosed in WO2021/193204A, even though the composite body is composed of a lithium-containing oxide, since lithium tetraborate acts as a bond between lithium compounds by plastic deformation, it is possible to form a lithium ion conductor exhibiting excellent lithium ion conductivity by a pressurization treatment, without performing the high-temperature sintering treatment.

## SUMMARY OF THE INVENTION

The above-described composite body disclosed in WO2021/193204A is soft even though it is composed of a lithium-containing oxide, and can ensure the binding between particles without performing a sintering treatment or without blending a binder such as an organic polymer, and has characteristics which have not been achieved by the oxide-based solid electrolyte so far. However, as a result of further studies, the present inventors have found that the lithium ion conductivity is not sufficient at the present stage for practical use as the solid electrolyte layer of the all-solid-state lithium ion secondary battery, and there is room for improvement toward practical use.

Lithium ion conductivity of the solid electrolyte used in the all-solid-state lithium ion secondary battery is an essential characteristic for operating the all-solid-state lithium ion secondary battery as a battery. Furthermore, the secondary battery is used by repeating charging and discharging, and a characteristic (cycle characteristics) which makes it difficult for battery performance to deteriorate even in a case where the charging and discharging are repeated is also an essential characteristic required for the all-solid-state lithium ion secondary battery.

An object of the present invention is to provide an all-solid-state lithium ion secondary battery that a lithium-containing oxide is used in a solid electrolyte layer, in which the solid electrolyte layer has excellent bonding property between particles even in a case where a high-temperature sintering treatment is not performed or even in a case where a binder such as an organic polymer is not blended, and the wound-type all-solid-state lithium ion secondary battery has higher lithium ion conductivity, is excellent in safety, and has excellent cycle characteristics; and is to provide a manufacturing method of the wound-type all-solid-state lithium ion secondary battery.

The object of the present invention has been achieved by the following methods.

[1] An all-solid-state lithium ion secondary battery comprising, in the following order:

a positive electrode layer;
a solid electrolyte layer; and
a negative electrode layer,
in which the solid electrolyte layer contains an amorphous solid electrolyte which contains a lithium-containing oxide containing Li, B, and O and a lithium salt, and in the amorphous solid electrolyte, a value of a ratio of a content of the lithium salt to a content of the lithium-containing oxide is 0.001 to 1.5 in terms of a molar ratio, and in a laminate consisting of a positive electrode active material layer, the solid electrolyte layer, and a negative electrode active material layer, a moisture content at 100°C based on a Karl Fischer titration method is 7.0% by mass or less, and a difference in moisture content between at 100°C and at 300°C based on the Karl Fischer titration method is 0.1% to 5.0% by mass.

[2] An all-solid-state lithium ion secondary battery comprising, in the following order:

a positive electrode layer;
a solid electrolyte layer; and
a negative electrode layer,
in which the solid electrolyte layer contains an amorphous solid electrolyte which contains a lithium-containing oxide containing Li, B, and O and a lithium salt, and in the amorphous solid electrolyte, a value of a ratio of a content of the lithium salt to a content of the lithium-containing oxide is 0.001 to 1.5 in terms of a molar ratio, and a laminate consisting of a positive electrode active material layer, the solid electrolyte layer, and a negative electrode active material layer is a laminate subjected to a vacuum drying treatment.

[3] The all-solid-state lithium ion secondary battery according to [1] or [2],

in which the lithium-containing oxide includes $Li_{2+x}B_{4+y}O7_{+z}$,
where $-0.3 < x < 0.3$, $-0.3 < y < 0.3$, and $-0.3 < z < 0.3$.

[4] The all-solid-state lithium ion secondary battery according to any one of [1] to [3],

in which the lithium salt is represented by Formula (1),

$$\text{Formula (1)} \qquad LiN(R_{f1}SO_2)(R_{f2}SO_2)$$

in the formula, $R_{f1}$ and $R_{f2}$ each independently represent a halogen atom or a perfluoroalkyl group.

[5] The all-solid-state lithium ion secondary battery according to any one of [1] to [4],
in which the lithium-containing oxide is a lithium-containing oxide subjected to a mechanical milling treatment.
[6] The all-solid-state lithium ion secondary battery according to any one of [1] to [5],
in which the all-solid-state lithium ion secondary battery is obtained by sealing a laminate in which the positive electrode layer, the solid electrolyte layer, and the negative electrode layer are arranged in this order.
[7] A manufacturing method of the all-solid-state lithium ion secondary battery according to any one of [1] to [6], comprising:

forming a laminate including the positive electrode active material layer, the solid electrolyte layer, and the negative electrode active material layer; and

subjecting the laminate to a vacuum drying treatment.

In the present invention or the specification, any numerical range expressed using "to" refers to a range including the numerical values before and after the "to" as a lower limit value and an upper limit value, respectively.

The all-solid-state lithium ion secondary battery according to the aspect of the present invention is an all-solid-state lithium ion secondary battery that a lithium-containing oxide is used in a solid electrolyte layer, in which the solid electrolyte layer has excellent bonding property between particles even in a case where a high-temperature sintering treatment is not performed or even in a case where a binder such as an organic polymer is not blended, and the wound-type all-solid-state lithium ion secondary battery has higher lithium ion conductivity, is excellent in safety, and has excellent cycle characteristics. In addition, the manufacturing method of the all-solid-state lithium ion secondary battery according to the aspect of the present invention is a manufacturing method suitable for obtaining the above-described all-solid-state lithium ion secondary battery.

**BRIEF DESCRIPTION OF THE DRAWINGS**

Fig. 1 is a cross-sectional view schematically showing an example of a configuration of an all-solid-state lithium ion secondary battery.
Fig. 2 is a diagram showing an example of an X-ray diffraction pattern for describing X-ray diffraction characteristics of a solid electrolyte (I) used in the present invention.
Fig. 3 is a diagram showing an example of a reduced pair distribution function G(r) obtained from an X-ray total scattering measurement of the solid electrolyte (I) used in the present invention.
Fig. 4 is a diagram showing an example of a spectrum obtained in a case where a solid $^7$Li-NMR measurement of the solid electrolyte (I) used in the present invention is performed at 20°C or 120°C.
Fig. 5 is a diagram showing an example of a spectrum obtained in a case where a solid $^7$Li-NMR measurement of a lithium tetraborate crystal is performed at 20°C or 120°C.
Fig. 6 is a diagram showing an example of a spectrum obtained in a case where a solid $^7$Li-NMR measurement of the solid electrolyte (I) used in the present invention is performed at 20°C.
Fig. 7 is a diagram in which a peak shown in Fig. 6 is waveform-separated.
Fig. 8 is a diagram showing an example of a Raman spectrum of the solid electrolyte (I) used in the present invention.
Fig. 9 is a diagram showing a Raman spectrum of a lithium tetraborate crystal.
Fig. 10 is a diagram showing a reduced pair distribution function G(r) obtained by an X-ray total scattering measurement of powdery $Li_2B_4O_7$ crystals.
Fig. 11 is a diagram showing an X-ray diffraction pattern of powdery $Li_2B_4O_7$ crystals.

**DESCRIPTION OF THE PREFERRED EMBODIMENTS**

[All-solid-state lithium ion secondary battery]

The all-solid-state lithium ion secondary battery according to the embodiment of the present invention (hereinafter, also referred to as "secondary battery according to the embodiment of the present invention") includes a positive electrode layer, a solid electrolyte layer, and a negative electrode layer in this order. The solid electrolyte layer is formed of an amorphous solid electrolyte having a specific composition described later.

In the secondary battery according to the embodiment of the present invention, a laminate constituting a laminated structure of the positive electrode layer, the solid electrolyte layer, and the negative electrode layer, the laminate consisting of a positive electrode active material layer, the solid electrolyte layer, and a negative electrode active material layer (having a laminated structure excluding a collector), has a moisture content at 100°C based on a Karl Fischer titration method (moisture content determined by a Karl Fischer titration method at 100°C) of 7.0% by mass or less. The moisture content based on the Karl Fischer titration method can be determined by a method described in Examples later. The moisture content of the laminate consisting of the positive electrode active material layer, the above-described solid electrolyte layer, and the negative electrode active material layer at 100°C based on the Karl Fischer titration method is preferably 6.0% by mass or less, more preferably 5.0% by mass or less, still more preferably 4.0% by mass or less, even more preferably 3.0% by mass or less, even still more preferably 2.0% by mass or less, further more preferably 1.5% by mass, and even further more preferably 1.0% by mass. The moisture content is usually 0.2% by mass or more, and is preferably 0.4% by mass or more, more preferably 0.6% by mass or more, and still more preferably 0.7% by mass or more. Therefore, the moisture content of the laminate consisting of the positive electrode active material layer, the above-described solid electrolyte layer, and the negative electrode active material layer at 100°C based on the Karl Fischer titration method is preferably 0.2% to 6.0% by mass, more preferably 0.2% to 5.0% by mass, still more preferably 0.4% to 4.0% by mass, even more preferably 0.4% to 3.0% by mass, even still more preferably 0.4% to 2.0% by mass, further more preferably 0.6% to 2.0% by mass, and still further more preferably 0.7% to 1.5% by mass.

In addition, in the secondary battery according to the embodiment of the present invention, a moisture content of the laminate consisting of the positive electrode active material layer, the above-described solid electrolyte layer, and the negative electrode active material layer at 300°C based on the Karl Fischer titration method is preferably 0.1% to 12.0% by mass, more preferably 0.5% to 10.0% by mass, still more preferably 1.0% to 8.0% by mass, even more preferably 1.5% to 5.0% by mass, and even still more preferably 1.5% to 3.0% by mass.

In the secondary battery according to the embodiment of the present invention, the difference in moisture content of the laminate consisting of the positive electrode active material layer, the above-described solid electrolyte layer, and the negative electrode active material layer at 100°C and at 300°C based on the Karl Fischer titration method ([Moisture content at 300°C based on Karl Fischer titration method] - [Moisture content at 100°C based on Karl Fischer titration method]) is 0.1% to 5.0% by mass. The difference in moisture content is preferably 0.5% to 5.0% by mass, more preferably 1.0% to 5.0% by mass, still more preferably 2.0% to 5.0% by mass, even more preferably 3.0% to 5.0% by mass, and also preferably 3.0% to 4.0% by mass. In addition, the above-described difference in moisture content is also preferably 0.1% to 4.0% by mass, 0.5% to 4.0% by mass, 0.5% to 3.0% by mass, 0.5% to 2.0% by mass, or 0.5% to 1.5% by mass.

Each layer of the secondary battery according to the embodiment of the present invention will be described.

<Solid electrolyte layer>

The solid electrolyte layer constituting the secondary battery according to the embodiment of the present invention is a layer formed in a layer shape with the amorphous (synonymous with non-crystalline) solid electrolyte having a specific composition or a mixture of the solid electrolyte and other components, and is usually a layer formed through a vacuum drying treatment. The amorphous solid electrolyte having a specific composition before the formation of the layer contains a lithium-containing oxide containing Li, B, and O (hereinafter, also referred to as "lithium-containing oxide"), a lithium salt, and water. In the amorphous solid electrolyte before the formation of the layer, a value of a ratio of a content of the lithium salt to a content of the lithium-containing oxide (lithium salt/lithium-containing oxide) is 0.001 to 1.5 in terms of a molar ratio. Therefore, also in the secondary battery according to the embodiment of the present invention, the value of the ratio of the content of the lithium salt to the content of the lithium-containing oxide in the solid electrolyte layer is 0.001 to 1.5 in terms of a molar ratio. In addition, in the amorphous solid electrolyte before the formation of the layer, a value of a ratio of a content of the water to the content of the lithium-containing oxide (water/lithium-containing oxide) is preferably 1 to 12 in terms of a molar ratio. Hereinafter, the amorphous solid electrolyte having the above-described specific composition will also be referred to as "solid electrolyte (I)". The solid electrolyte (I) is usually an inorganic solid electrolyte.

The solid electrolyte (I) is in an amorphous state, and exhibits an elastic characteristic that is likely to be plastically deformed. As a result, in the solid electrolyte layer containing the solid electrolyte (I), which is formed through a pressurization treatment, a drying treatment, and the like, adhesiveness between the solid electrolytes (I) and/or adhesiveness between the solid electrolyte (I) and other ion conductors is improved, so that an interface resistance can be reduced and more excellent ion conductivity can be obtained. By forming the solid electrolyte layer using the solid electrolyte (I), it is possible to form a lithium ion conductor which exhibits excellent lithium ion conductivity by a pressurization treatment or the like without performing a high-temperature sintering treatment, even though the solid electrolyte is an oxide-based solid electrolyte having high safety.

The above-described water contained in the solid electrolyte (I) includes at least bound water. The reason why the solid electrolyte (I) exhibits high lithium ion conductivity is not clear, but it is considered that, in the amorphous solid electrolyte (I), a soft hydrated layer is easily formed on a surface of the lithium-containing oxide, and a large amount of lithium derived from the lithium salt is contained in the hydrated layer, and as a result, the ion conductivity is further enhanced.

Here, in the present invention or the specification, the "bound water" means water other than water present as free water or an OH group bonded to the lithium-containing oxide. The solid electrolyte (I) is in a state of solid particles (including a state in which the solid particles are bonded to each other) even in a case of containing the above-described amount of water. That is, the solid electrolyte (I) contains the bound water which is not removed or is difficult to be removed under normal drying conditions. In addition, as long as the state of the solid particles in the solid electrolyte (I) can be maintained, a part of the water contained in the solid electrolyte (I) may be free water. In a case where the solid electrolyte (I) contains free water, at least a part of the free water is removed by a drying treatment described later in the solid electrolyte layer (a laminate consisting of a positive electrode active material layer, a solid electrolyte layer, and a negative electrode active material layer) formed of the solid electrolyte (I). In addition, a part of the bound water may be removed depending on interaction with the lithium-containing oxide or the lithium salt, and depending on the level of the above-described drying treatment condition.

In the present invention, the "amorphous" solid electrolyte (I) means that the following X-ray diffraction characteristics are satisfied.

(X-ray diffraction characteristics)

In an X-ray diffraction pattern of the solid electrolyte (I) obtained from an X-ray diffraction measurement using a CuKα ray, none of a first peak in which a peak top is located in a range where a diffraction 2θ is 21.6° to 22.0° and a full-width at half maximum is 0.65° or less, a second peak in which a peak top is located in a range where a diffraction 2θ is 25.4° to 25.8° and a full-width at half maximum is 0.65° or less, a third peak in which a peak top is located in a range where a diffraction 2θ is 33.4° to 33.8° and a full-width at half maximum is 0.65° or less, and a fourth peak in which a peak top is located in a range where a diffraction 2θ is 34.4° to 34.8° and a full-width at half maximum is 0.65° or less are present. Alternatively, in the X-ray diffraction pattern, in a case where at least one peak of the first peak, the second peak, the third peak, or the fourth peak described above (hereinafter, referred to as "peak X) is present, an intensity ratio of the at least one peak in the peak X, which is calculated by the following intensity measuring method, is 5.0 or less.

-Intensity measuring method-

An average intensity (Av1) in a range of +0.45° to +0.55° from the diffraction angle 2θ of the peak top of the peak X is calculated and an average intensity (Av2) in a range of -0.55° to -0.45° from the diffraction angle 2θ of the peak top of the peak X is calculated, and an arithmetic mean value of Av1 and Av2 is calculated. A value of a ratio of a peak intensity at the peak top of the peak X to the arithmetic mean value (peak intensity at peak top of peak X/arithmetic mean value) is defined as the intensity ratio.

The X-ray diffraction characteristics will be described in more detail.

In a case where none of the first peak, the second peak, the third peak, and the fourth peak described above are present in the X-ray diffraction pattern of the solid electrolyte (I) obtained from the X-ray diffraction measurement using a CuKα ray, the above-described X-ray diffraction characteristics are satisfied, and the solid electrolyte (I) is in an amorphous state.

In addition, even though the above-described peak X is present in the X-ray diffraction pattern of the solid electrolyte (I) obtained from the X-ray diffraction measurement using a CuKα ray, in a case where the intensity ratio of the at least one peak in the peak X, which is obtained by the above-described intensity measuring method, satisfies 5.0 or less, the above-described X-ray diffraction characteristics are satisfied, and the solid electrolyte (I) is in an amorphous state.

Here, the full-width at half maximum (FWHM) of the peak means a peak width (°) at a point of 1/2 of the peak intensity at the peak top.

The above-described intensity measuring method will be described in more detail with reference to Fig. 2.

Fig. 2 is a diagram showing an example of the peak X appearing in a diffraction pattern of the solid electrolyte (I) obtained from an X-ray diffraction measurement using a CuKα ray. In the diffraction pattern shown in Fig. 2, a specific peak in which an intensity of a peak top is represented by an intensity 1 is shown. In the intensity measuring method, as shown in Fig. 2, an average intensity (Av1) in a range of +0.45° to +0.55° from the diffraction angle 2θ of the peak top of the peak X is calculated, and an average intensity (Av2) in a range of -0.55° to -0.45° from the diffraction angle 2θ of the peak top of the peak X is calculated. Next, an arithmetic mean value of Av1 and Av2 is calculated, and a value of a ratio of the intensity 1 to the arithmetic mean value is obtained as the intensity ratio. In a case where the above-described X-ray diffraction characteristics are satisfied, it means that the solid electrolyte (I) does not have a crystal structure, or almost does not have a crystal structure and is in an amorphous state.

That is, the above-described first peak to fourth peak are mainly peaks derived from a crystal structure in the solid electrolyte (for example, a crystal structure of lithium tetraborate), and a case where these peaks are not present means that the solid electrolyte is in an amorphous state. In addition, even though at least one of the first peak to the fourth peak is present, a case where the intensity ratio of the at least one peak in the present peaks X is 5.0 or less means that almost no crystal structure which hinders the effect of the present invention is present in the solid electrolyte (I). For example, a peak derived from a specific component (for example, the lithium salt) may overlap with any one of the above-described first peak to fourth peak. However, in the amorphous solid electrolyte, all of the first peak to the fourth peak are usually decreased. Therefore, even in a case where a peak due to the specific component overlap with any one of the first peak to the fourth peak and one large peak appears, it can be said that the presence of at least one peak X in which the intensity ratio is equal to or less than a predetermined value indicates that the solid electrolyte (I) is in an amorphous state.

The above-described X-ray diffraction measurement is performed using a CuKα ray under measurement conditions of 0.01 °/step and 3 °/min.

In the X-ray diffraction pattern of the solid electrolyte (I) obtained from the X-ray diffraction measurement using a CuKα ray, it is preferable that none of the first peak, the second peak, the third peak, and the fourth peak described above is present, or even in a case where at least one peak X of the first peak, the second peak, the third peak, and the fourth peak described above is present, the intensity ratio of the at least one peak in the peak X is 3.0 or less.

Among these, it is more preferable that none of the first peak, the second peak, the third peak, and the fourth peak described above is present, or even in a case where at least one peak X of the first peak, the second peak, the third peak, and the fourth peak described above is present, the intensity ratio of the at least one peak in the peak X is 2.0 or less.

In the above-described X-ray diffraction pattern, in a case where two or more peaks in which a peak top is located in a range of 21.6° to 22.0° and the full-width at half maximum is 0.65° or less are present, a peak having the highest diffracted X-ray intensity is selected as the first peak to determine the above-described X-ray diffraction characteristics.

In addition, in the above-described X-ray diffraction pattern, in a case where two or more peaks in which a peak top is located in a range of 25.4° to 25.8° and the full-width at half maximum is 0.65° or less are present, a peak having the highest diffracted X-ray intensity is selected as the second peak to determine the above-described X-ray diffraction characteristics.

In addition, in the above-described X-ray diffraction pattern, in a case where two or more peaks in which a peak top is located in a range of 33.4° to 33.8° and the full-width at half maximum is 0.65° or less are present, a peak having the highest diffracted X-ray intensity is selected as the third peak to determine the above-described X-ray diffraction characteristics.

In addition, in the above-described X-ray diffraction pattern, in a case where two or more peaks in which a peak top is located in a range of 34.4° to 34.8° and the full-width at half maximum is 0.65° or less are present, a peak having the highest diffracted X-ray intensity is selected as the fourth peak to determine the above-described X-ray diffraction characteristics.

(X-ray total scattering characteristics)

The solid electrolyte (I) preferably satisfies the following requirement A-1 as X-ray total scattering characteristics. In addition, in a case where the solid electrolyte (I) satisfies the above-described X-ray diffraction characteristics, the solid electrolyte (I) generally satisfies the following requirement A-2.

-Requirement A-1-

In a reduced pair distribution function G(r) of the solid electrolyte (I) obtained from an X-ray total scattering measurement, a first peak in which a peak top is located in a range where r is $1.43 \pm 0.2$ Å and a second peak in which a peak top is located in a range where r is $2.40 \pm 0.2$ Å are present, G(r) of the peak top of the first peak is more than 1.0, and G(r) of the peak top of the second peak is 0.8 or more.

-Requirement A-2-

In the reduced pair distribution function G(r) of the solid electrolyte (I) obtained from an X-ray total scattering measurement, an absolute value of G(r) in a range where r is more than 5 Å and 10 Å or less is less than 1.0.

In a case where the solid electrolyte (I) satisfies the requirement A-1 and the requirement A-2, the solid electrolyte (I) has a short-range ordered structure related to interatomic distances of B-O and B-B, but has almost no long-range ordered structure. Therefore, the oxide solid electrolyte itself exhibits an elastic characteristic of being softer and more easily plastically deformable than the lithium-containing oxide in the related art. As a result, in a layer containing the solid electrolyte (I), which is formed by a pressurization treatment or the like, it is presumed that adhesiveness between the solid electrolytes (I) and/or adhesiveness between the solid electrolyte (I) and other ion conductors is improved, so that an interface resistance can be reduced and more excellent ion conductivity can be obtained.

The requirement A-1 and the requirement A-2 will be described in more detail with reference to the drawings.

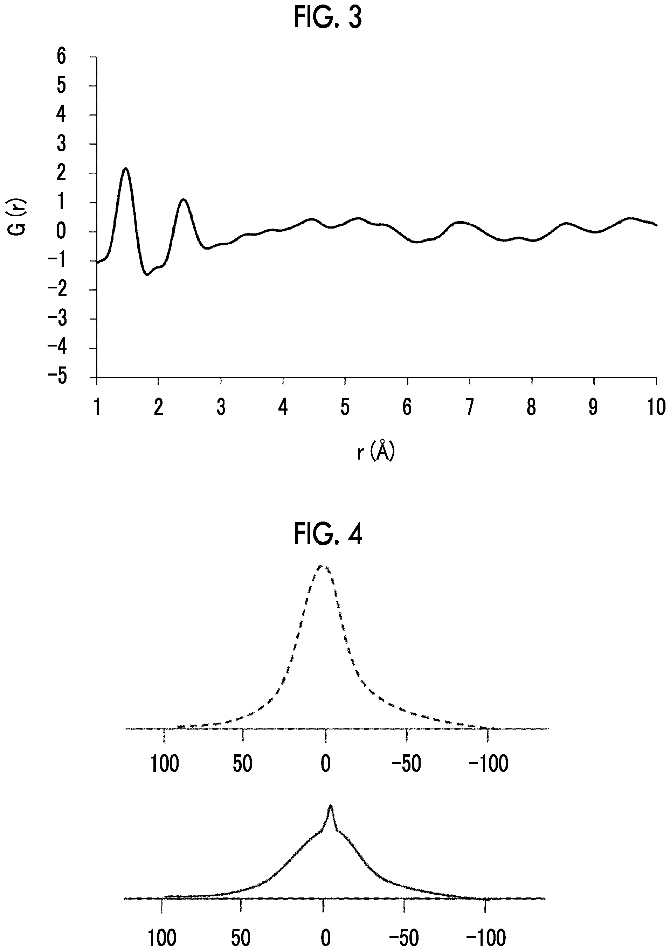

Fig. 3 shows an example of the reduced pair distribution function G(r) of the solid electrolyte (I) obtained by an X-ray total scattering measurement. A vertical axis of Fig. 3 is a reduced pair distribution function obtained by subjecting X-ray scattering to Fourier transform, and it indicates the probability that an atom is present at a position of a distance r. The X-ray total scattering measurement can be performed using SPring-8 BL04B2 (acceleration voltage: 61.4 keV, wavelength: 0.2019 Å). The reduced pair distribution function G(r) is obtained by converting a scattering intensity I which is obtained experimentally according to the following procedure.

First, the scattering intensity $I_{obs}$ is represented by the following expression (1). In addition, a structure factor S(Q) is obtained by dividing a coherent scattering $I_{coh}$ by the product of the number N of atoms and the square of an atomic scattering factor f, as represented by the following expression (2).

$$I_{obs} = I_{coh} + I_{incoh} + I_{fluorescence} \qquad (1)$$

$$S(Q) = \frac{I_{coh}}{Nf^2} \qquad (2)$$

The structure factor S(Q) is used for pair distribution function (PDF) analysis. In the above expression (2), a required intensity is solely the coherent scattering $I_{coh}$. The incoherent scattering $I_{incoh}$ and the X-ray fluorescence $I_{fluorescence}$ can be subtracted from the scattering intensity $I_{obs}$ by a blank measurement, subtraction using a theoretical expression, and a discriminator of a detector.

The coherent scattering $I_{coh}$ is represented by Debye's scattering expression (the following expression (3)) (N: total number of atoms, f: atomic scattering factor, $r_{ij}$: interatomic distance between i and j).

$$I_{coh} = \sum_{i=1}^{N} \sum_{j=1}^{N} f_i f_j \frac{sinQr_{ij}}{Qr_{ij}} \qquad (3)$$

Focusing on any atom, in a case where an atomic density at the distance r is denoted by p(r), the number of atoms present inside a sphere having a radius of r to r + d(r) is $4\pi r^2 \rho(r)dr$, and thus the above expression (3) is represented by the following expression (4).

$$I_{coh} = Nf^2 \left[ 1 + 4\pi \int_0^\infty r^2 \rho(r) \frac{sinQr}{Qr} dr \right] \qquad (4)$$

In a case where an average density of atoms is denoted by $\rho_0$, the above expression (4) is modified to obtain the following expression (5).

$$\frac{I_{coh}}{N} = f^2 \left[ 1 + 4\pi \int_0^\infty r^2 (\rho(r) - \rho_0) \frac{sinQr}{Qr} \right] \qquad (5)$$

From the above expression (5) and the above expression (2), the following expression (6) is obtained.

$$4\pi r^2 \rho(r) = 4\pi r^2 \rho_0 + \frac{2r}{\pi} \int_0^\infty Q[S(Q) - 1]sinQrdQ \qquad (6)$$

The pair distribution function g(r) is represented by the following expression (7).

$$g(r) = \frac{\rho_r}{\rho_0} \qquad (7)$$

From the above expression (6) and the above expression (7), the following expression (8) is obtained.

$$g(r) = 1 + \frac{1}{2\pi^2 \rho_0 r} \int_0^\infty Q[S(Q) - 1]sinQrdQ \qquad (8)$$

As described above, the pair distribution function can be determined by the Fourier transform of the structural factor S(Q). In order to easily observe medium-range and long-range order, the pair distribution function is converted into G(r) = 4πr(g(r) - 1), which is the reduced pair distribution function (Fig. 3). The g(r) which oscillates around 0 represents a density difference from the average density at each interatomic distance, and it is larger than the average density of 1 in a case where there is a correlation at a specific interatomic distance. As a result, it reflects the distance and coordination number of elements corresponding to the local to intermediate distance. In a case where the order is lost, ρ(r) approaches the average density, and thus g(r) approaches 1. Therefore, in the amorphous structure, as r is larger, the order is lost, and thus g(r) is 1, that is, G(r) is 0.

In the requirement A-1, as shown in Fig. 3, in the reduced pair distribution function G(r) of the solid electrolyte (I) obtained from an X-ray total scattering measurement, a first peak P1 in which a peak top is located in a range where r is 1.43 ± 0.2 Å and a second peak P2 in which a peak top is located in a range where r is 2.40 ± 0.2 Å are present, G(r) of the peak top of the first peak P1 is more than 1.0 (preferably, 1.2 or more), and G(r) of the peak top of the second peak P2 is 0.8 or more (preferably, more than 1.0).

In Fig. 3, the peak top of the first peak P1 is located at 1.43 Å, and the peak top of the second peak P2 is located at 2.40 Å.

At the position of 1.43 Å, a peak attributed to the interatomic distance of boron (B) - oxygen (O) is present. In addition, at the position of 2.40 Å, a peak attributed to the interatomic distance of boron (B) - boron (B) is present. That is, the fact that the above-described two peaks (the first peak and the second peak) are observed means that periodic structures corresponding to the above-described two interatomic distances are present in the solid electrolyte (I).

In addition, in the requirement A-2, as shown in Fig. 3, the absolute value of G(r) in a range where r is more than 5 Å and 10 Å or less is less than 1.0. As described above, the fact that the absolute value of G(r) in a range where r is more than 5 Å and 10 Å or less is less than 1.0 means that the long-range ordered structure is hardly present in the solid electrolyte (I).

In the above-described reduced pair distribution function G(r), peaks other than the first peak and the second peak may be present in a range where r is 5 Å or less.

A method of forming the solid electrolyte (I) into an amorphous state is not particularly limited. For example, in preparation of the solid electrolyte (I), a method of using, as a raw material, a lithium-containing oxide subjected to a mechanical milling treatment can be adopted. The mechanical milling treatment may be performed in the presence of the lithium salt.

-Mechanical milling treatment-

The mechanical milling treatment is a treatment of pulverizing a sample while applying mechanical energy. Examples of the mechanical milling treatment include a ball mill, a vibration mill, a turbo mill, and a disc mill, and from the viewpoint of obtaining the amorphous solid electrolyte (I) with high productivity, a ball mill is preferable. Examples of the ball milling include vibration ball milling, rotary ball milling, and planetary ball milling, and planetary ball milling is more preferable.

Conditions for the ball mill treatment are appropriately adjusted depending on the treatment target. A material of pulverization balls (media) is not particularly limited, and examples thereof include agate, silicon nitride, zirconia, alumina, and an iron-based alloy, in which stabilized zirconia (YSZ) is preferable. An average particle diameter of the pulverization balls is not particularly limited, but from the viewpoint that the solid electrolyte (I) can be produced with high productivity, it is preferably 1 to 10 mm and more preferably 3 to 7 mm. The above-described average particle diameter is obtained by randomly measuring diameters of 50 pulverization balls and arithmetically averaging the measured values. In a case where the pulverization balls are not spherical, a major axis is taken as the diameter. The number of the pulverization balls is not particularly limited.

A material of a pulverization pot in the ball mill treatment is also not particularly limited. Examples thereof include agate, silicon nitride, zirconia, alumina, and an iron-based alloy, and stabilized zirconia (YSZ) is preferable.

A rotation speed of the ball mill treatment is not particularly limited, and can be set to, for example, 200 to 700 rpm, preferably 350 to 550 rpm. A treatment time of the ball milling is not particularly limited, and can be set to, for example, 10 to 200 hours, preferably 20 to 140 hours. The atmosphere of the ball mill treatment may be an atmosphere of the air or an atmosphere of an inert gas (for example, argon, helium, nitrogen, or the like).

In the production of the solid electrolyte (I), it is preferable to perform the following steps 1A to 3A.

Step 1A: step of subjecting a lithium-containing oxide to a mechanical milling treatment in the presence of a lithium salt
Step 2A: step of mixing the product obtained in the step 1A with water
Step 3A: step of removing water from the dispersion liquid obtained in the step 2A to obtain the solid electrolyte (I)

In the step 1A, an amount of the lithium salt used is not particularly limited and is appropriately adjusted such that the solid electrolyte (I) defined in the present invention is obtained.

In the above-described step 2A, an amount of water used is not particularly limited. For example, the amount of water used can be set to 10 to 200 parts by mass, preferably 50 to 150 parts by mass with respect to 100 parts by mass of the product obtained in the step 1A.

The method of mixing the product obtained in the step 1A with the water is not particularly limited, and the mixing may be performed in a batchwise manner or may be performed such that the water is added stepwise to the product obtained in the step 1A. In the mixing, an ultrasonic treatment may be performed as necessary. A time of the ultrasonic treatment is not particularly limited, and can be set to, for example, 10 minutes to 5 hours.

The step 3A is a step of removing water from the dispersion liquid obtained in the step 2A to obtain the solid electrolyte (I). The method of removing the water from the dispersion liquid obtained in the step 2A is not particularly limited, and the water may be removed by a heating treatment or may be removed by a vacuum drying treatment.

Before the above-described step 1A, a step 0 of subjecting the lithium-containing oxide to a mechanical milling treatment in an environment in which a lithium salt is not present may be performed.

In the production of the solid electrolyte (I), it is also preferable to perform the following steps 1B to 3B, instead of the above-described steps 1A to 3A.

Step 1B: step of subjecting a lithium-containing oxide to a mechanical milling treatment
Step 2B: step of mixing the product obtained in the step 1B with water and a lithium salt
Step 3B: step of removing water from the dispersion liquid obtained in the step 2B to obtain the solid electrolyte (I)

The difference between the step 1B and the step 1A is that the mechanical milling treatment is performed in the presence of the lithium salt in the step 1A, whereas the mechanical milling treatment is performed without using the lithium salt in the step 1B. Accordingly, in the step 2B, the product obtained in the step 1B is mixed with water and a lithium salt.

A procedure of the step 2B is not particularly limited, and may be a method (method 1) of collectively mixing the product obtained in the step 1B, water, and a lithium salt; a method (method 2) of preparing a dispersion liquid by mixing the product obtained in the step 1B with water, and then mixing the obtained dispersion liquid with a lithium salt; or a method (method 3) of preparing a dispersion liquid 1 by mixing the product obtained in the step 1B with water, preparing a solution 2 by mixing a lithium salt with water, and then mixing the dispersion liquid 1 with the solution 2. In a case where the product obtained in the step 1B is mixed with water, a dispersion treatment such as an ultrasonic treatment may be appropriately performed.

In the method 2, in a case where the dispersion liquid obtained by mixing the product obtained in the step 1B with water is mixed with a lithium salt, the obtained solution is likely to be gelated in a case where the lithium salt is too much, so that the mixing amount of the lithium salt is restricted. On the other hand, in the method 3, even in a case where the product obtained in the step 1B and the lithium salt are mixed in an equimolar amount, the gelation of the solution is less likely to occur, so that the mixing amount of the lithium salt can be increased. From this viewpoint, the method 3 is preferable.

The procedures of the step 3B and the step 3A are the same.

In the production of the solid electrolyte (I), it is also preferable to perform the following steps 1C to 3C, instead of the above-described steps 1A to 3A.

Step 1C: step of subjecting a lithium-containing oxide to a mechanical milling treatment
Step 2C: step of mixing the product obtained in the step 1C with water
Step 3C: step of mixing a product obtained by removing water from the dispersion liquid obtained in the step 2C with a lithium salt to obtain the solid electrolyte (I)

The procedures of the step 1C and the step 1B are the same.

The procedures of the step 2C and the step 2A are the same.

The step 3C is different from the steps 3A and 3B in that the product obtained by removing water from the dispersion liquid obtained in the step 2C is mixed with a lithium salt.

In the step 3C, an amount of the lithium salt used is not particularly limited and is appropriately adjusted such that the solid electrolyte (I) defined in the present invention is obtained.

The method of mixing the product obtained by removing water from the dispersion liquid obtained in the step 2C with a lithium salt is not particularly limited, and a method of infusing the product with a solution obtained by dissolving the lithium salt in water to mix the two may be adopted.

(Component composition of solid electrolyte (I))

As described above, the solid electrolyte (I) used in the present invention is an amorphous solid electrolyte, and in the solid electrolyte (I), the value of the ratio of the content of the lithium salt to the content of the lithium-containing oxide is 0.001 to 1.5 in terms of a molar ratio, and the value of the ratio of the content of the water to the content of the lithium-containing oxide is 1 to 12 in terms of a molar ratio.

The value of the ratio of the content of the lithium salt to the content of the lithium-containing oxide in the solid electrolyte (I) is preferably 0.001 to 1.2, more preferably 0.01 to 1.2, still more preferably 0.1 to 1.2, and particularly preferably 0.5 to 1.2 in terms of a molar ratio.

In addition, the value of the ratio of the content of the water to the content of the lithium-containing oxide in the solid electrolyte (I) is more preferably 2 to 12 and still more preferably 3 to 11 in terms of molar ratio. In addition, the molar ratio is also preferably 2 to 10, 2 to 8, 2 to 7, or 3 to 7.

The molar amounts of the lithium-containing oxide, the lithium salt, and the water in the solid electrolyte (I) can be determined based on element analysis. In addition, the molar amount of the water can also be determined by Karl Fischer method or the like.

The content of the water in the solid electrolyte (I) is preferably 50% by mass or less, more preferably 45% by mass or less, still more preferably 40% by mass or less, and even more preferably 35% by mass or less. In addition, the content of the water in the solid electrolyte (I) is also preferably 30% by mass or less, or 25% by mass or less.

In addition, the content of the water in the solid electrolyte (I) is usually 5% by mass or more, preferably 10% by mass or more and more preferably 15% by mass or more. Therefore, the content of the water in the solid electrolyte (I) is preferably 5% to 50% by mass, more preferably 5% to 45% by mass, still more preferably 10% to 40% by mass, and even more preferably 10% to 35% by mass; and also preferably 10% to 30% by mass, 15% to 30% by mass, or 15% to 25% by mass.

The content of the lithium-containing oxide in the solid electrolyte (I) is preferably 20% to 80% by mass, more preferably 20% to 75% by mass, and still more preferably 25% to 70% by mass.

In addition, the content of the lithium salt in the solid electrolyte (I) is preferably 0.5% to 60% by mass, more preferably 1.0% to 55% by mass, and still more preferably 2.0% to 50% by mass; and also preferably 5.0% to 50% by mass.

-Lithium-containing oxide-

As described above, the lithium-containing oxide constituting the solid electrolyte (I) contains Li, B, and O.

The above-described lithium-containing oxide is preferably a compound represented by $Li_{2+x}B_{4+y}O_{7+z}$ (-0.3 < x < 0.3, -0.3 < y < 0.3, -0.3 < z < 0.3). That is, in a case where a molar amount of Li is represented by setting a molar amount of B to 4.00, the molar amount of Li is preferably 1.58 to 2.49 (that is, $1.7 \times 4/4.3$ to $2.3 \times 4/3.7$), and the molar amount of O is preferably 6.23 to 7.89 (that is, $6.7 \times 4/4.3$ to $7.3 \times 4/3.7$). In other words, assuming that the molar content amount of B is set to 4.00, it is preferable that the relative value of the molar content amount of Li is 1.58 to 2.49 and the molar amount of O is 6.23 to 7.89. Typical examples of such a lithium-containing oxide include lithium tetraborate ($Li_2B_4O_7$).

In addition, the above-described lithium-containing oxide is also preferably a compound represented by $Li_{1+x}B_{3+y}O_{5+z}$ (-0.3 < x < 0.3, -0.3 < y < 0.3, -0.3 < z < 0.3). Typical examples of such a lithium-containing oxide include lithium triborate ($LiB_3O_5$).

In addition, the above-described lithium-containing oxide is also preferably a compound represented by $Li_{3+x}B_{11+y}O_{18+z}$ (-0.3 < x < 0.3, -0.3 < y < 0.3, -0.3 < z < 0.3). Typical examples of such a lithium-containing oxide include $Li_3B_{11}O_{18}$.

In addition, the above-described lithium-containing oxide is also preferably a compound represented by $Li_{3+x}B_{7+y}O_{12+z}$ (-0.3 < x < 0.3, -0.3 < y < 0.3, -0.3 < z < 0.3). Typical examples of such a lithium-containing oxide include $Li_3B_7O_{12}$.

Therefore, the above-described lithium-containing oxide is preferably at least one of $Li_{2+x}B_{4+y}O_{7+z}$, $Li_{1+x}B_{3+y}O_{5+z}$, $Li_{3+x}B_{11+y}O_{18+z}$, or $Li_{3+x}B_{7+y}O_{12+z}$ described above.

In addition, at least one of $LiBO_5$, $Li_2B_7O_{12}$, $LiB_2O_3(OH)H_2O$, or $Li_4B_8O_{13}(OH)_2(H_2O)_3$ can also be used as the lithium-containing oxide, instead of the above-described lithium-containing oxide or together with the above-described lithium-containing oxide.

In the solid electrolyte (I), the lithium-containing oxide is in an amorphous state. That is, the lithium-containing oxide in the solid electrolyte (I) is also in a desired amorphous state such that the solid electrolyte (I) is in the above-described amorphous state.

Among these, the lithium-containing oxide is preferably amorphous lithium tetraborate.

-Lithium salt-

The lithium salt constituting the solid electrolyte (I) used in the present invention is not particularly limited; examples thereof include a salt composed of $Li^+$ and an anion; and a salt composed of $Li^+$ and an organic anion is preferable and a salt composed of $Li^+$ and an organic anion having a halogen atom is more preferable.

It is preferable that the lithium salt constituting the solid electrolyte (I) used in the present invention contains two or more specific elements selected from the group consisting of an element of Group 3 of the periodic table, an element of Group 4 of the periodic table, an element of Group 13 of the periodic table, an element of Group 14 of the periodic table, an element of Group 15 of the periodic table, an element of Group 16 of the periodic table, an element of Group 17 of the periodic table, and H.

As the lithium salt constituting the solid electrolyte (I) used in the present invention, for example, a compound represented by Formula (1) is preferable.

$$\text{Formula (1)} \qquad \text{LiN}(R_{f1}SO_2)(R_{f2}SO_2)$$

$R_{f1}$ and $R_{f2}$ each independently represent a halogen atom or a perfluoroalkyl group.

In a case where $R_{f1}$ and $R_{f2}$ are a perfluoroalkyl group, the number of carbon atoms in the perfluoroalkyl group is not particularly limited.

$R_{f1}$ and $R_{f2}$ are preferably a halogen atom or a perfluoroalkyl group having 1 to 6 carbon atoms, more preferably a halogen atom or a perfluoroalkyl group having 1 or 2 carbon atoms, and still more preferably a halogen atom. As the volume of the terminal group increases, the steric hindrance increases, which is a factor that hinders ion conduction. Therefore, in a case where $R_{f1}$ and $R_{f2}$ are a perfluoroalkyl group, the perfluoroalkyl group preferably has a small number of carbon atoms.

The lithium salt which can be contained in the solid electrolyte (I) used in the present invention is not limited to the above-described compound represented by Formula (1). Examples of the lithium salt which can be contained in the solid electrolyte (I) used in the present invention are shown below.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; and an inorganic chloride salt such as $LiAlCl_4$

(L-2) Fluorine-containing organic lithium salt: perfluoroalkane sulfonate such as $LiCF_3SO_3$; fluorosulfonylimide salt or perfluoroalkanesulfonylimide salt such as $LiN(CF_3SO_2)_2$, $LiN(CF_3CF_2SO_2)_2$, $LiN(FSO_2)_2$ (in the present specification, also described as $Li(FSO_2)_2N$), and $LiN(CF_3SO_2)(C_4F_9SO_2)$; perfluoroalkane sulfonylmethide salt such as $LiC(CF_3SO_2)_3$; and fluoroalkyl fluorophosphate (preferably, perfluoroalkyl fluorophosphate) such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, and $Li[PF_3(CF_2CF_2CF_2CF_3)_3]$

(L-3) Oxalatoborate salt: lithium bis(oxalato)borate and lithium difluorooxalatoborate

In addition to the above, examples thereof include LiF, LiCl, LiBr, LiI, $Li_2SO_4$, $LiNO_3$, $Li_2CO_3$, $CH_3COOLi$, $LiAsF_6$, $LiSbF_6$, $LiAlCl_4$, and $LiB(C_6H_5)_4$.

Among these, $LiPF_6$, $LiBF_4$, $LiAsF_6$, $LiSbF_6$, $LiClO_4$, $Li(R_{f1}SO_2)$, $LiN(R_{f1}SO_2)_2$, $LiN(FSO_2)_2$, or $LiN(R_{f1}SO_2)$ $(R_{f2}SO_2)$ is preferable; and $LiPF_6$, $LiBF_4$, $LiN(R_{f1}SO_2)_2$, $LiN(FSO_2)_2$, or $LiN(R_{f1}SO_2)(R_{f2}SO_2)$ is more preferable. In these examples, $R_{f1}$ and $R_{f2}$ each independently represent a perfluoroalkyl group, and the number of carbon atoms therein is preferably 1 to 6, more preferably 1 to 4, and still more preferably 1 or 2. In addition, $LiNO_3$ or 1,1,2,2,3,3-hexafluoropropane-1,3-disulfonimide lithium is also preferable as the lithium salt.

(Element composition of solid electrolyte (I))

Regarding the solid electrolyte (I), the component composition thereof is described with reference to the compound constituting the solid electrolyte (I). Next, the solid electrolyte (I) will be described from the viewpoint of a preferred element composition. That is, in one aspect of the secondary battery according to the embodiment of the present invention, the solid electrolyte (I) can be specified as follows, for example, based on the element composition without including the "lithium-containing oxide" and the "lithium salt" as the specific matters.

In the solid electrolyte (I) used in the present invention, in a case where the molar amount of B in the solid electrolyte (I) is set to 4.00, the molar amount of Li is preferably 1.58 to 3.49 (preferably 1.58 to 3.00, more preferably 1.90 to 3.00, and still more preferably 2.00 to 3.00). In addition, in a case where the molar amount of B in the solid electrolyte (I) is set to 4.00, the molar amount of O is preferably 6.23 to 25.00 (preferably 6.50 to 23.00, more preferably 8.00 to 23.00, still more preferably 10.00 to 23.00, and even more preferably 10.00 to 18.00). In addition, in a case where the molar amount of B in the solid electrolyte (I) is set to 4.00, it is preferable that molar amounts of elements other than B, Li, and O are each preferably 0.001 to 10.00 (preferably 0.001 to 6.00 and more preferably 0.01 to 5.00).

The content of each element is specified by a general element analysis. As a method of the element analysis, for example, Li and B are analyzed by inductively coupled plasma optical emission spectrometry (ICP-OES); N and the like are analyzed by an inert gas melting method; and F and S are analyzed by combustion ion chromatography. Regarding O, analyzed masses of elements other than O are added together, and the content of O can be calculated as a difference between the analyzed masses and the total amount of the powder. The method of calculating the content of each element is not limited to those described above, and from an analysis result of a content of one kind of element, a content of another element may be estimated in consideration of the structure of the compound to be used.

From the content of each element calculated by the element analysis, the molar amounts of Li, O, and other elements in a case where the molar amount of B is set to 4.00 are calculated.

In a preferred aspect of the solid electrolyte (I), in addition to Li, B, and O, the solid electrolyte (I) further contains one or more elements (E) selected from an element of Group 4 of the periodic table, an element of Group 15 of the periodic table, an element of Group 16 of the periodic table, an element of Group 17 of the periodic table, Si, C, Sc, and Y; and it is more preferable to contain two or more kinds thereof. Among these, it is preferable to contain one or more elements (E) selected from F, Cl, Br, I, S, P, Si, Se, Te, C, Sb, As, Sc, Y, Zr, Ti, Hf, and N; and it is preferable to contain two or more kinds thereof.

Examples of the element of Group 4 of the periodic table include Ti, Zr, Hf, and Rf. Examples of the element of Group 15 of the periodic table include N, P, As, Sb, Bi, and Mc. Examples of the element of Group 16 of the periodic table S, Se, Te, Po, and Lv. Examples of the element of Group 17 of the periodic table include F, Cl, Br, I, At, and Ts.

The kind of the element (E) contained in the solid electrolyte (I) may be 3 or more, and is preferably 2 to 5 and more preferably 2 to 4.

As a second embodiment of the solid electrolyte (I), it is preferable to contain two or more elements (E) selected from F, S, N, P, and C; it is more preferable to contain two or more elements (E) selected from F, S, C, and N; and it is still more preferable to contain three elements (E) of F, S, and N.

In the solid electrolyte (I) containing one or more kinds (preferably two or more kinds) of the above-described elements (E), in a case where the molar amount of Li is represented by setting the molar amount of B in the solid electrolyte (I) to 4.00, the molar amount of Li is preferably 1.58 to 3.49. That is, in a case where the molar content amount of B is set to 4.00, the relative value of the molar content amount of Li is preferably 1.58 to 3.49. Among these, in a case where the molar amount of Li is represented by setting the molar amount of B in the solid electrolyte (I) to 4.00, the molar amount of Li is preferably 1.58 to 3.00, more preferably 1.90 to 3.00, and still more preferably 2.00 to 3.00.

In the solid electrolyte (I) containing one or more kinds (preferably two or more kinds) of the above-described elements (E), in a case where the molar amount of O is represented by setting the molar amount of B in the solid electrolyte (I) to 4.00, the molar amount of O is preferably 6.23 to 25.00. That is, in a case where the molar content amount of B is set to 4.00, the relative value of the molar content amount of O is preferably 6.23 to 25.00. Among these, in a case where the molar amount of O is represented by setting the molar amount of B in the solid electrolyte (I) to 4.00, the molar amount of O is preferably 6.50 to 23.00, more preferably 8.00 to 23.00, still more preferably 10.00 to 23.00, and still more preferably 10.00 to 18.00.

In the solid electrolyte (I) containing one or more kinds (preferably two or more kinds) of the above-described elements (E), in a case where the molar amount of the elements (E) is represented by setting the molar amount of B in the solid electrolyte (I) to 4.00, each molar amount of the elements (E) is preferably 0.001 to 10.00. That is, in a case where the molar content amount of B is set to 4.00, the relative value of each molar content amount of the elements (E) is preferably 0.001 to 10.00. Among these, in a case where the molar amount of the element (E) is represented by setting the molar amount of B in the solid electrolyte (I) to 4.00, each molar amount of the elements (E) is preferably 0.001 to 6.00 and more preferably 0.01 to 5.00.

Examples of one suitable aspect of the element composition of the solid electrolyte (I) containing one or more kinds (preferably two or more kinds) of the above-described elements (E) include a solid electrolyte containing Li, B, O, F, S, and N, in which, in a case where the molar amount B is set to 4.00, the molar amount of Li is 1.58 to 3.49 (preferably 1.58 to 3.00, more preferably 1.90 to 3.00, and still more preferably 2.00 to 3.00), the molar amount of O is 6.23 to 25.00 (preferably 6.50 to 23.00, more preferably 8.00 to 23.00, still more preferably 10.00 to 23.00, and even more preferably 10.00 to 18.00), the molar amount of F is 0.001 to 10.00 (preferably 0.01 to 10.00), the molar amount of S is 0.001 to 2.00 (preferably 0.01 to 2.00), and the molar amount of N is 0.001 to 1.00 (preferably 0.005 to 1.00).

The solid electrolyte (I) used in the present invention is in the above-described amorphous state, and as a result, it is preferable that the solid electrolyte (I) exhibits the following characteristics in addition to the above-described X-ray diffraction characteristics.

(Solid $^7$Li-NMR spectral characteristics)

In the solid electrolyte (I), a proportion of a full-width at half maximum, which is calculated by the following method from a spectrum obtained by performing a solid $^7$Li-NMR measurement at 20°C and 120°C, is preferably 50% or less, more preferably 40% or less, and still more preferably 35% or less. The lower limit thereof is not particularly limited, but is usually 10% or more.

The above-described proportion of the full-width at half maximum is obtained by performing a solid $^7$Li-NMR measurement of the solid electrolyte (I) at each of 20°C and 120°C; determining a full-width at half maximum (full-width 1 at half maximum) of a peak in which a chemical shift appears in a range of -100 to +100 ppm in a spectrum obtained by a measurement at 20°C, and a full-width at half maximum (full-width 2 at half maximum) of a peak in which a chemical shift appears in a range of -100 to +100 ppm in a spectrum obtained by a measurement at 120°C; and then calculating a percentage of a proportion of the full-width 2 at half maximum to the full-width 1 at half maximum {(Full-width 2 at half maximum/Full-width 1 at half maximum) × 100}. The full-width at half maximum (FWHM) of the peak means a width (ppm) at a point (H/2) of 1/2 of a height (H) of the peak.

Hereinafter, the above-described characteristic will be described with reference to Fig. 4. Fig. 4 shows an example of the spectrum obtained in a case where the solid $^7$Li-NMR measurement of the solid electrolyte (I) is performed at 20°C or 120°C. The spectrum shown on the lower side by the solid line in Fig. 4 is a spectrum obtained in a case where the solid $^7$Li-NMR measurement is performed at 20°C; and the spectrum shown on the upper side by the broken line in Fig. 4 is a spectrum obtained in a case where the solid $^7$Li-NMR measurement is performed at 120°C.

Generally, in the solid $^7$Li-NMR measurement, in a case where mobility of Li$^+$ is high, the peak to be obtained is a sharper peak. In the aspect shown in Fig. 4, in a case where the spectrum at 20°C and the spectrum at 120°C are compared, the spectrum at 120°C is sharper. That is, in the aspect shown in Fig. 4, it is indicated that the mobility of Li$^+$ is high due to the presence of Li defects. It is conceived that such a solid electrolyte (I) is likely to be plastically deformed due to the above-described defect structure, and thus has excellent hopping property of Li$^+$.

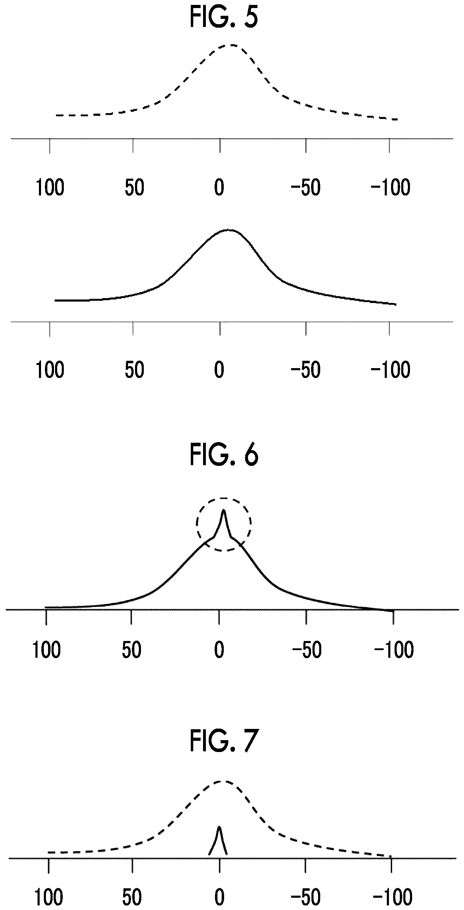

For reference, in a case where a general lithium tetraborate crystal is subjected to the solid $^7$Li-NMR measurement at 20°C or 120°C, the spectrum measured at 20°C shown by the solid line, shown on the lower side of Fig. 5, and the spectrum measured at 120°C shown by the broken line, shown on the upper side of Fig. 5, tends to have substantially the same shape. That is, the lithium tetraborate crystal has no Li defects and the like, and as a result, it has a high elastic modulus and is hardly plastically deformed.

Conditions for the above-described solid $^7$Li-NMR measurement are as follows.

The measurement is performed by a single pulse method using a 4 mm HX CP-MAS probe, 90° pulse width: 3.2 μs, observation frequency: 155.546 MHz, observation width: 1397.6 ppm, repetition time: 15 sec, integration: 1 time, and MAS rotation speed: 0 Hz.

In addition, in the solid electrolyte (I) used in the present invention, in a case where a first peak appearing in a range of -100 to +100 ppm in the spectrum obtained in a case where the solid $^7$Li-NMR measurement is performed at 20°C is waveform-separated, it is preferable that a second peak having a full-width at half maximum of 5 ppm or less appears in a range with a chemical shift of -3 to 3 ppm, and a proportion of an area intensity of the second peak to an area intensity of the first peak is 0.5% or more. The above-described proportion of the area intensity is more preferably 2% or more, still more preferably 5% or more, even more preferably 10% or more, and even still more preferably 15% or more. In the aspect of the present invention in which the solid electrolyte (I) contains water, the solid $^7$Li-NMR spectral characteristics of the solid electrolyte (I) tend to be as described above. The upper limit of the above-described proportion of the area intensity is not particularly limited, but is usually 50% or less.

Hereinafter, the above-described characteristic will be described with reference to Figs. 6 and 7.

Fig. 6 shows an example of the spectrum obtained in a case where the solid $^7$Li-NMR measurement of the solid electrolyte (I) is performed at 20°C. As shown in Fig. 6, in the solid electrolyte (I), a peak (corresponding to the first peak) is observed in a range of -100 to +100 ppm, and a small peak is observed in the vicinity of a chemical shift of 0 ppm, as shown by the broken line at the first peak. As described above, it is considered to be affected the fact that a sharp peak is observed in a case where the mobility of Li$^+$ is high.

Next, Fig. 7 shows a diagram in a case where the first peak is waveform-separated. As shown in Fig. 7, the first peak is waveform-separated into a small peak (corresponding to the second peak) represented by the solid line, and a large peak represented by the broken line. The above-described second peak is a peak which appears in a range with a chemical shift of -3 to 3 ppm, and has a full-width at half maximum of 5 ppm or less.

In the solid electrolyte (I), it is preferable that the proportion of the area intensity of the second peak shown by the solid line in Fig. 7 to the area intensity of the first peak (peak before the waveform separation) shown in Fig. 6 {(Area intensity of second peak/Area intensity of first peak) × 100} is within the above-described range.

Examples of the method of waveform separation include a method using a known software, and examples of the software include Igor Pro, which is graph processing software manufactured by WaveMetrics, Inc.

(Raman spectral characteristics)

In the solid electrolyte (I), a coefficient of determination, which is obtained by performing linear regression analysis according to a least-squares method in a wave number range of 600 to 850 cm$^{-1}$ in a Raman spectrum of the solid electrolyte (I), is preferably 0.9400 or more and more preferably 0.9600 or more, and also preferably 0.9800 or more. The upper limit thereof is not particularly limited, but is usually 1.0000 or less.

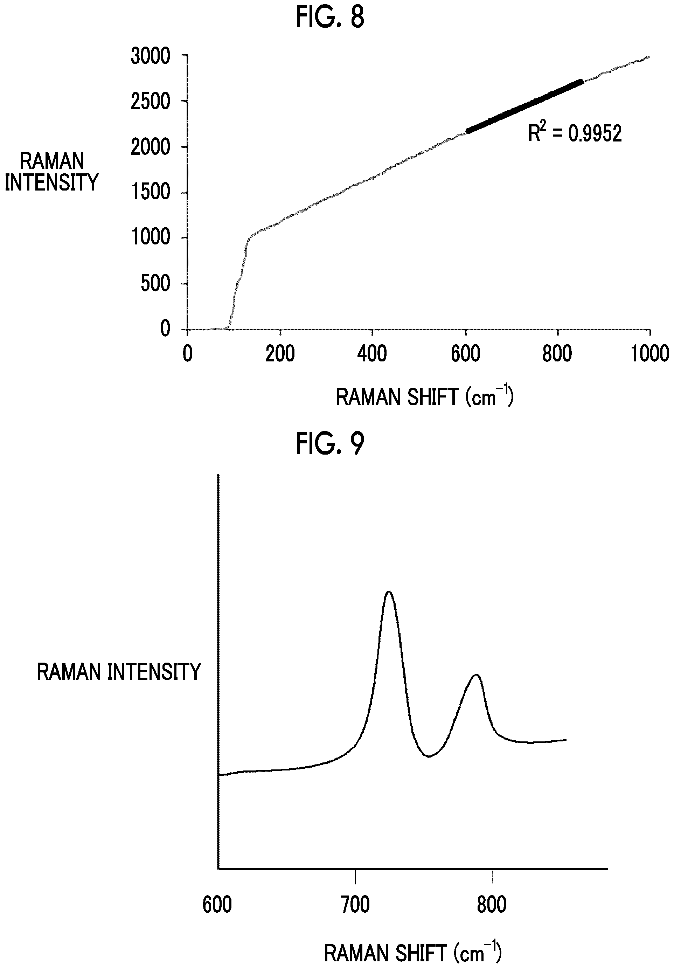

The above-described Raman spectral characteristics will be described with reference to Fig. 8.

First, a Raman spectrum of the solid electrolyte (I) is acquired. Raman imaging is performed as the measuring method of the Raman spectrum. The Raman imaging is a microscopic spectroscopy method which combines Raman spectroscopy with a microscopic technique. Specifically, the Raman imaging is a method of scanning a sample with excitation light to detect measurement light including Raman scattered light, and then visualizing distribution or the like of components based on the intensity of the measurement light.

The measurement conditions for the Raman imaging are as follows: an environment of atmospheric air of 27°C, an excitation light of 532 nm, an objective lens of 100 magnifications, a point scanning according to the mapping method, a step of 1 $\mu$m, an exposure time per point of 1 second, the number of times of integration of 1, and a measurement range of a range of 70 $\mu$m $\times$ 50 $\mu$m.

In addition, the Raman spectrum data is subjected to a principal component analysis (PCA) processing to remove noise. Specifically, in the principal component analysis processing, the spectrum is recombined using components having an autocorrelation coefficient of 0.6 or more.

Fig. 8 shows an example of the Raman spectrum of the solid electrolyte (I). In the graph shown in Fig. 8, the vertical axis indicates the Raman intensity, and the lateral axis indicates the Raman shift. A coefficient of determination (coefficient of determination $R^2$) obtained by performing linear regression analysis according to a least-squares method is calculated in a wave number range of 600 to 850 cm$^{-1}$ of the Raman spectrum shown in Fig. 8. That is, in a wave number range of 600 to 850 cm$^{-1}$ in the Raman spectrum of Fig. 8, a regression line (the thick broken line in Fig. 8) is determined according to the least-squares method, and the coefficient of determination $R^2$ of the regression line is calculated. As the coefficient of determination, a value between 0 (no linear correlation) and 1 (complete linear correlation of the measured values) is taken according to the linear correlation of the measured values.

In the solid electrolyte (I), a peak is not substantially observed in the wave number range of 600 to 850 cm$^{-1}$ as shown in Fig. 8, and as a result, a high coefficient of determination is exhibited.

The above-described coefficient of determination $R^2$ corresponds to the square of the correlation coefficient (Pearson's product-moment correlation coefficient). More specifically, in the present specification, the coefficient of determination $R^2$ is calculated according to the following expression. In the expression, $x_1$ and $y_1$ represent a wave number in the Raman spectrum and a Raman intensity corresponding to the wave number; $x_2$ represents the (arithmetic) average of the wave numbers; and $y_2$ represents the (arithmetic) average of the Raman intensities.

$$R^2 = \frac{\left(\sum (x_1 - x_2) \cdot (y_1 - y_2)\right)^2}{\sum (x_1 - x_2)^2 \cdot \sum (y_1 - y_2)^2}$$

On the other hand, for reference, Fig. 9 shows a Raman spectrum of a general lithium tetraborate crystal. As shown in Fig. 9, in a case of a general lithium tetraborate crystal, peaks are observed in a wave number range of 716 to 726 cm$^{-1}$ and a wave number range of 771 to 785 cm$^{-1}$, derived from the structure thereof. With the peaks, the coefficient of determination thereof is less than 0.9400 in a case where the coefficient of determination is calculated by performing linear regression analysis according to a least-squares method in a wave number range of 600 to 850 cm$^{-1}$.

That is, the fact that the coefficient of determination is 0.9400 or more means that the solid electrolyte (I) does not substantially include a crystal structure. Therefore, as a result, it is considered that the solid electrolyte (I) has a characteristic of easily undergoing plastic deformation and a characteristic of excellent hopping property of Li$^+$.

(Infrared absorption spectral characteristics)

In an infrared absorption spectrum of the solid electrolyte (I), a value of a ratio of a maximum absorption intensity in a wave number range of 3,000 to 3,500 cm$^{-1}$ to a maximum absorption intensity in a wave number range of 800 to 1,600 cm$^{-1}$ (Maximum absorption intensity in wave number range of 3000 to 3500 cm$^{-1}$/Maximum absorption intensity in wave number range of 800 to 1600 cm$^{-1}$) is preferably 1/5 or more (0.2 or more). Among these, the above-described ratio is preferably 3/10 or more and more preferably 2/5 or more. The upper limit thereof is not particularly limited, but is preferably 1 or less.

In the infrared absorption spectrum, an OH stretching vibration mode is observed in a wave number range of 3,000 to 3,500 cm$^{-1}$, and a B-O stretching vibration mode is observed in a wave number range of 800 to 1,600 cm$^{-1}$. In the solid electrolyte (I), a strong absorption intensity derived from the OH stretching vibration mode is observed, and it is confirmed that a large number of OH groups or a large amount of water is contained. In such a solid electrolyte (I), lithium ions tend to move easily, and as a result, the ion conductivity tends to be improved.

In the wave number range of 800 to 1,600 cm$^{-1}$, a vibration mode derived from the lithium salt can also be observed.

Measurement conditions for the above-described infrared absorption spectrum can be as follows.

The measurement is performed using objective lens: Cassegrain type (NA: 0.65) of 32 magnifications, detector: MCT-A, measurement range: 650 to 4,000 $cm^{-1}$, resolution: 4 $cm^{-1}$, and sample cell: diamond cell.

The obtained infrared absorption spectrum is subjected to correction for removing signals derived from water and $CO_2$ in the air, and the background is further subjected to offset-correction to set the absorption intensity to 0. In addition, the measurement is performed in the air after vacuum drying at 40°C for 2 hours.

The ion conductivity (27°C) of the solid electrolyte (I) is not particularly limited, and from the viewpoint of application to various applications, it is preferably $1.0 \times 10^{-5}$ S/cm or more, more preferably $1.0 \times 10^{-4}$ S/cm or more, still more preferably $1.0 \times 10^{-3}$ S/cm or more, and particularly preferably $3.0 \times 10^{-3}$ S/cm or more. The upper limit thereof is not particularly limited, but is usually $1.0 \times 10^{-2}$ S/cm or less.

In addition, it is also preferable that the solid electrolyte (I) exhibits the following characteristics or physical properties.

(Mass reduction rate)

A mass reduction rate in a case where the solid electrolyte (I) is heated to 800°C is preferably 20% to 40% by mass and more preferably 25% to 35% by mass. It is considered that the mass reduction by the above-described heating is due to removal of at least moisture contained in the solid electrolyte (I). In a case where the solid electrolyte (I) contains such moisture, the conductivity of lithium ions can be further improved.

In the above-described heating treatment, the heating is performed at a temperature rising rate of 20 °C/sec in a range of 25°C to 800°C. A known thermogravimetric differential thermal analysis (TG-DTA) device can be used for measuring the mass reduction rate. The above-described mass reduction rate is calculated by {(Mass at 25°C - Mass at 800°C)/Mass at 25°C} $\times$ 100.

In the measurement of the mass reduction rate, the solid electrolyte (I) is subjected to vacuum drying at 40°C for 2 hours in advance. In addition, the measurement of the mass reduction rate is performed in the air.

The solid electrolyte layer constituting the secondary battery according to the embodiment of the present invention may contain other components in addition to the solid electrolyte (I).

For example, the solid electrolyte layer can contain a binder consisting of an organic polymer. The organic polymer constituting the binder may be in a particle shape or may be in a non-particle shape. By containing the binder, it is possible to more reliably prevent the solid electrolyte layer or the electrode layer from cracking or the like.

In addition, the solid electrolyte layer may contain a solid electrolyte other than the solid electrolyte (I). The other solid electrolyte means a solid electrolyte in which lithium ions can be moved therein. The solid electrolyte is preferably an inorganic solid electrolyte. Examples of the other solid electrolytes include a sulfide-based solid electrolyte, an oxide-based solid electrolyte, a halide-based solid electrolyte, and a hydride-based solid electrolyte. In consideration of safety, at least one kind of an oxide-based solid electrolyte, a halide-based solid electrolyte, or a hydride-based solid electrolyte is preferable, and an oxide-based solid electrolyte is more preferable.

A content of the solid electrolyte (I) in the solid electrolyte layer is preferably 50% by mass or more, more preferably 60% by mass or more, still more preferably 70% by mass or more, and also preferably 80% by mass or more or 90% by mass.

A thickness of the solid electrolyte layer constituting the secondary battery according to the embodiment of the present invention is not particularly limited, and can be set to, for example, 10 to 1,000 $\mu$m, preferably 50 to 400 $\mu$m.

<Positive electrode layer>

The positive electrode layer is generally composed of a positive electrode collector and a positive electrode active material layer, but in a case where the positive electrode collector also functions as the positive electrode active material layer (in other words, in a case where the positive electrode active material layer also functions as the positive electrode collector), it is not necessary to be composed of two layers of the positive electrode active material layer and the positive electrode collector, and a single layer configuration may be adopted. In addition, the positive electrode active material layer generally contains a solid electrolyte (preferably an inorganic solid electrolyte) together with a positive electrode active material, but may not contain the solid electrolyte. A content of the positive electrode active material in the positive electrode active material layer is preferably 50% by mass or more, more preferably 60% by mass or more, still more preferably 70% by mass or more, and it is also preferably 80% by mass or more and 90% by mass.

In a case where the positive electrode active material layer contains a solid electrolyte, the type of the solid electrolyte is not particularly limited. From the viewpoint of prioritizing flexibility, a sulfide-based solid electrolyte can be used, and from the viewpoint of prioritizing higher safety, an oxide-based solid electrolyte can be used.

From the viewpoint of achieving both flexibility and safety at a high level, it is preferable to use the above-described solid electrolyte (I). In this manner, the solid electrolyte (I) also acts as a binder of solid particles contained in the positive electrode layer, and thus the positive electrode layer can be made to have higher flexibility.

As the positive electrode active material used in the positive electrode layer, a positive electrode active material which can be used for a typical lithium ion secondary battery can be widely used. A suitable aspect of the positive electrode active material will be described below.

(Positive electrode active material)

As the positive electrode active material, a positive electrode active material capable of reversibly intercalating and/or deintercalating lithium ions is preferable. The positive electrode active material is not particularly limited, and is preferably a transition metal oxide and more preferably a transition metal oxide containing a transition metal element Ma (one or more kinds of elements selected from Co, Ni, Fe, Mn, Cu, and V). In addition, an element Mb (an element of Group 1 (Ia) of the periodic table other than lithium, an element of Group 2 (IIa), or an element such as Al, Ga, In, Ge, Sn, Pb, Sb, Bi, Si, P, or B) may be mixed into the transition metal oxide. The mixed amount is preferably 0 to 30 mol% with respect to the amount (100 mol%) of the transition metal element Ma. It is more preferable that the transition metal oxide is synthesized by mixing the above-described components such that a molar ratio Li/Ma is 0.3 to 2.2.

Specific examples of the transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds. Among them, the transition metal oxide having a bedded salt-type structure (MA) is preferable, and $LiCoO_2$ or $LiNi_{1/3}Co_{1/3}Mn_{1/3}O_2$ is more preferable.

Examples of the transition metal oxide having a bedded salt-type structure (MA) include $LiCoO_2$ (lithium cobalt oxide [LCO]), $LiNiO_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Examples of the transition metal oxide having a spinel-type structure (MB) include $LiMn_2O_4$ (LMO), $LiNi_{0.5}Mn_{1.5}O_4$ ([LNMO]), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; cobalt pyrophosphates such as $Li_2CoP_2O_7$ (LCP) and $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

A shape of the positive electrode active material is not particularly limited, and is typically a particle shape. A volume average particle size of the positive electrode active material is not particularly limited, and is, for example, preferably 0.1 to 50 $\mu$m. The volume average particle size of the positive electrode active material particles can be determined in the same manner as the volume average particle diameter of the negative electrode active material, which will be described later.

A positive electrode active material obtained using a baking method may be used after being washed with water, an acidic aqueous solution, an alkaline aqueous solution, or an organic solvent.

The positive electrode active material may be surface-coated with a surface coating agent, sulfur, or phosphorus, and further with actinic ray, same as the negative electrode active material described later.

One kind of the positive electrode active material may be used alone, or two or more kinds thereof may be used in combination.

(Positive electrode collector)

The collector constituting the positive electrode layer is an electron conductor. In addition, the positive electrode collector is usually in a form of a film sheet.

Examples of a constitutional material of the positive electrode collector include aluminum, an aluminum alloy, stainless steel, nickel, and titanium; and aluminum or an aluminum alloy is preferable. Examples of the positive electrode collector include a collector obtained by subjecting a surface of aluminum or stainless steel to a treatment with carbon, nickel, titanium, or silver (collector on which a thin film is formed).

A thickness of the positive electrode active material layer constituting the secondary battery according to the embodiment of the present invention is not particularly limited, and can be set to, for example, 5 to 500 $\mu$m, preferably 20 to 200 $\mu$m.

In addition, a thickness of the positive electrode collector constituting the secondary battery according to the embodiment of the present invention is not particularly limited, and can be set to, for example, 10 to 100 $\mu$m, preferably 10 to 50 $\mu$m.

<Negative electrode layer>

The negative electrode layer is generally composed of a negative electrode collector and a negative electrode active material layer, but in a case where the negative electrode collector also functions as the negative electrode active material layer (in other words, in a case where the negative electrode active material layer also functions as the negative electrode collector), it is not necessary to be composed of two layers of the negative electrode active material layer and the negative electrode collector, and a single layer configuration may be adopted. In addition, the negative electrode active material layer generally contains a solid electrolyte (preferably an inorganic solid electrolyte) together with a negative electrode active material, but may not contain the solid electrolyte.

A content of the negative electrode active material in the negative electrode active material layer is preferably 50% by mass or more, more preferably 60% by mass or more, still more preferably 70% by mass or more, and it is also preferably 80% by mass or more and 90% by mass.

In a case where the negative electrode active material layer contains a solid electrolyte, the type of the solid electrolyte is not particularly limited. From the viewpoint of prioritizing flexibility, a sulfide-based solid electrolyte can be used, and from the viewpoint of prioritizing higher safety, an oxide-based solid electrolyte can be used.

From the viewpoint of achieving both flexibility and safety at a high level, it is preferable to use the above-described solid electrolyte (I). In this manner, the solid electrolyte (I) also acts as a binder of solid particles contained in the negative electrode layer, and thus the negative electrode layer can be made to have higher flexibility.

As the negative electrode active material used in the negative electrode layer, a negative electrode active material which can be used for a typical lithium ion secondary battery can be widely used. A suitable aspect of the negative electrode active material will be described below.

(Negative electrode active material)

As the negative electrode active material, a negative electrode active material capable of reversibly intercalating and deintercalating lithium ions is preferable. The negative electrode active material is not particularly limited, and examples thereof include a carbonaceous material, an oxide of a metal or a metalloid element, a lithium single substance, a lithium alloy, and a negative electrode active material capable of forming an alloy with lithium.

The carbonaceous material used as the negative electrode active material is a material substantially consisting of carbon. Examples thereof include petroleum pitch; carbon black such as acetylene black (AB); graphite (natural graphite and artificial graphite such as vapor-grown graphite); and carbonaceous material obtained by baking various synthetic resins such as a polyacrylonitrile (PAN)-based resin and a furfuryl alcohol resin.

Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

These carbonaceous materials can be classified into non-graphitizable carbonaceous materials (also referred to as "hard carbon") and graphitizable carbonaceous materials, based on the graphitization degree.

In addition, it is preferable that the carbonaceous material has a surface spacing, density, or crystallite size described in JP1987-022066A (JP-S62-022066A), JP1990-006856A (JP-H2-006856A), and JP1991-045473A (JP-H3-045473A). The carbonaceous material is not necessarily a single material, and for example, may be a mixture of natural graphite and artificial graphite described in JP1993-090844A (JP-H5-090844A) or graphite having a coating layer described in JP1994-004516A (JP-H6-004516A).

The carbonaceous material is preferably hard carbon or graphite, and more preferably graphite.

The oxide of a metal element or a metalloid element, which can be used as the negative electrode active material, is not particularly limited as long as it is an oxide capable of intercalating and deintercalating lithium; and examples thereof include an oxide of a metal element (metal oxide), a composite oxide of a metal element, a composite oxide of a metal element and a metalloid element, and an oxide of a metalloid element (a metalloid oxide). The composite oxide of a metal element and the composite oxide of a metal element and a metalloid element are also collectively referred to as a metal composite oxide.

These oxides are preferably a noncrystalline oxide, and also preferably a chalcogenide which is a reaction product between a metal element and an element of Group 16 of the periodic table.

In the present invention, the metalloid element refers to an element having intermediate properties between those of a metal element and a non-metalloid element, and typically, the metalloid element includes six elements including boron, silicon, germanium, arsenic, antimony, and tellurium, and further includes three elements including selenium, polonium, and astatine.

In addition, the "noncrystalline" means an oxide having a broad scattering band with an apex in a range of 20° to 40° in terms of the $2\theta$ value in case of being measured by an X-ray diffraction method using a $CuK\alpha$ ray, and the oxide may have a crystalline diffraction line. The highest intensity in a crystalline diffraction line observed in a range of 40° to 70° in terms of the $2\theta$ value is preferably 100 times or less and more preferably 5 times or less with respect to the intensity of a diffraction line at the apex in a broad scattering band observed in a range of 20° to 40° in terms of the $2\theta$ value, and it is still more preferable that the oxide does not have a crystalline diffraction line.

In the compound group consisting of the noncrystalline oxides and the chalcogenides described above, the noncrystalline oxide of a metalloid element or the above-described chalcogenide is more preferable; and a (composite) oxide consisting of one element or a combination of two or more elements selected from elements (for example, Al, Ga, Si, Sn, Ge, Pb, Sb, and Bi) of Group 13 (IIIB) to Group 15 (VB) of the periodic table or the chalcogenide is particularly preferable.

The noncrystalline oxide and the chalcogenide are preferably $Ga_2O_3$, $GeO$, $PbO$, $PbO_2$, $Pb_2O_3$, $Pb_2O_4$, $Pb_3O_4$, $Sb_2O_3$, $Sb_2O_4$, $Sb_2O_8Bi_2O_3$, $Sb_2OsSi_2O_3$, $Sb_2O_5$, $Bi_2O_3$, $Bi_2O_4$, $GeS$, $PbS$, $PbS_2$, $Sb_2S_3$, or $Sb_2S_5$.

As a negative electrode active material which can be used in combination with the noncrystalline oxide negative electrode active material mainly using Sn, Si, or Ge, a carbonaceous material capable of intercalating and deintercalating lithium ions or lithium metal, a lithium single substance, a lithium alloy, or a negative electrode active material capable of forming an alloy with lithium is preferable.

From the viewpoint of high current density charging and discharging characteristics, it is preferable that the oxide of a metal element or a metalloid element (particularly, the metal (composite) oxide) and the above-described chalcogenide contains at least one of titanium or lithium as a constitutional component.

Examples of the metal composite oxide containing lithium (lithium composite metal oxide) include a composite oxide of lithium oxide and the above-described metal composite oxide or the above-described chalcogenide. More specific examples thereof include $Li_2SnO_2$.

It is also preferable that the negative electrode active material (for example, the metal oxide) contains a titanium element (a titanium oxide). Specifically, $Li_4Ti_5O_{12}$ (lithium titanium oxide [LTO]) is preferable from the viewpoint that the volume variation during the intercalation and deintercalation of lithium ions is small, and thus high-speed charging and discharging characteristics are excellent, and deterioration of electrodes is suppressed, whereby it is possible to improve life of the all-solid-state lithium ion secondary battery.

The lithium alloy as the negative electrode active material is not particularly limited as long as it is typically used as a negative electrode active material for an all-solid-state lithium ion secondary battery, and examples thereof include a lithium aluminum alloy.

The negative electrode active material capable of forming an alloy with lithium is not particularly limited as long as it is typically used as a negative electrode active material for an all-solid-state lithium ion secondary battery. Examples of the above-described negative electrode active material include a negative electrode active material (alloy) containing a silicon element or a tin element and a metal such as Al and In; and a negative electrode active material containing a silicon element (silicon element-containing active material) capable of exhibiting high battery capacity is preferable, and a silicon element-containing active material in which a content of the silicon element is 50 mol% or more with respect to all constitutional elements is more preferable.

In general, a negative electrode containing the negative electrode active material (for example, an Si negative electrode containing the silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage in that the battery driving duration can be extended.

Examples of the silicon element-containing active material include a silicon-containing alloy (for example, $LaSi_2$, $VSi_2$, La-Si, Gd-Si, or Ni-Si) containing a silicon material such as Si and SiOx ($0 < x \leq 1$) and further containing titanium, vanadium, chromium, manganese, nickel, copper, or lanthanum; and a structured active material thereof (for example, $LaSi_2$/Si). In addition, examples thereof include an active material containing a silicon element and a tin element, such as $SnSiO_3$ and $SnSiS_3$. Since SiOx itself can be used as the negative electrode active material (the metalloid oxide) and Si is produced along with the operation of the all-solid-state lithium ion secondary battery, $SiO_x$ can be used as a negative electrode active material (or a precursor material thereof) capable of forming an alloy with lithium.

Examples of the negative electrode active material containing a tin element include Sn, SnO, $SnO_2$, SnS, $SnS_2$, and the above-described active material containing a silicon element and a tin element.

From the viewpoint of battery capacity, the negative electrode active material is preferably the negative electrode active material capable of forming an alloy with lithium, more preferably the above-described silicon material or the above-described silicon-containing alloy (alloy containing a silicon element), and still more preferably silicon (Si) or a silicon-containing alloy.

It is also preferable to use a titanium niobium composite oxide as the negative electrode active material. It is expected that the titanium niobium composite oxide has a high theoretical volume capacity density, long life, and possibility of rapid charging. Examples of the titanium niobium composite oxide include $TiNb_2O_7$.

A shape of the negative electrode active material is not particularly limited, but is preferably a particle shape. A volume average particle size of the negative electrode active material is not particularly limited, and it is preferably 0.1 to 60 $\mu$m, more preferably 0.5 to 20 $\mu$m, and still more preferably 1.0 to 15 $\mu$m.

The volume average particle size is measured according to the following procedure.

Using water (in a case of being unstable in water, heptane), the negative electrode active material is diluted in a 20 mL sample bottle to prepare a 1% by mass dispersion liquid. The diluted dispersion liquid sample is irradiated with 1 kHz ultrasonic waves for 10 minutes, and then immediately used for test. Data collection is performed 50 times with the dispersion liquid sample using a laser diffraction/scattering-type particle size distribution analyzer and a quartz cell for measurement at a temperature of 25°C, thereby obtaining the volume average particle size. Other detailed conditions and the like can be found in JIS Z8828: 2013 "Particle Diameter Analysis-Dynamic Light Scattering", as necessary. Five samples are produced for each level, and the average value thereof is adopted.

One kind of the negative electrode active material may be used alone, or two or more kinds thereof may be used in combination.

The surface of the negative electrode active material may be subjected to surface coating with another metal oxide.

Examples of the surface coating agent include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$.

In addition, the surface of the electrode containing the negative electrode active material may be subjected to a surface treatment with sulfur or phosphorus.

Furthermore, the particle surface of the negative electrode active material may be subjected to a surface treatment with an actinic ray or an active gas (for example, plasma) before or after the above-described surface coating.

(Negative electrode collector)

The collector constituting the negative electrode layer is an electron conductor. In addition, the negative electrode collector is usually in a form of a film sheet.

Examples of a constitutional material of the negative electrode collector include aluminum, copper, a copper alloy, stainless steel, nickel, and titanium; and aluminum, copper, a copper alloy, or stainless steel is preferable. Examples of the negative electrode collector include a collector obtained by subjecting a surface of aluminum, copper, a copper alloy, or stainless steel to a treatment with carbon, nickel, titanium, or silver.

A thickness of the negative electrode active material layer constituting the secondary battery according to the embodiment of the present invention is not particularly limited, and can be set to, for example, 5 to 500 $\mu$m, preferably 20 to 200 $\mu$m.

In addition, a thickness of the negative electrode collector constituting the secondary battery according to the embodiment of the present invention is not particularly limited, and can be set to, for example, 10 to 100 $\mu$m, preferably 10 to 50 $\mu$m.

The positive electrode layer and the negative electrode layer may contain a component (other components) other than the solid electrolyte and the active material in the active material layers. For example, a conductive auxiliary agent can be contained.

As the conductive auxiliary agent, a conductive auxiliary agent which is known as a general conductive auxiliary agent can be used. Examples of the conductive auxiliary agent include graphite such as natural graphite and artificial graphite, carbon black such as acetylene black, Ketjen black, and furnace black, amorphous carbon such as needle cokes, carbon fiber such as vapor-grown carbon fiber and carbon nanotube, and a carbonaceous material such as graphene and fullerene, which are electron-conductive materials. Furthermore, a conductive polymer such as polyaniline, polypyrrole, polythiophene, polyacetylene, and a polyphenylene derivative may also be used.

In addition to the above-described conductive auxiliary agent, a general conductive auxiliary agent containing no carbon atom, such as metal powder and metal fiber, may be used.

The conductive auxiliary agent refers to a conductive auxiliary agent which does not cause the intercalation and deintercalation of Li at the time of charging and discharging of the battery, and does not function as an active material. As a result, among conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

Examples of the other components also include the above-described binder and lithium salt.

<Manufacturing of all-solid-state lithium ion secondary battery>

The secondary battery according to the embodiment of the present invention can be manufactured with reference to a general manufacturing method for an all-solid-state secondary battery, except that the solid electrolyte (I) is used in at least the solid electrolyte layer. In the secondary battery to be obtained, in order to reduce the moisture content of the laminate consisting of the positive electrode active material layer, the solid electrolyte layer, and the negative electrode active material layer to the level specified in the present invention, in the manufacturing of the secondary battery according to the embodiment of the present invention, it is preferable that a laminate including the positive electrode active material layer, the solid electrolyte layer, and the negative electrode active material layer is formed using the solid electrolyte (I), and then subjected to a vacuum drying treatment or the like described later. A preferred embodiment of the manufacturing method of the secondary battery according to the embodiment of the present invention will be described.

The manufacturing method of the secondary battery according to the embodiment of the present invention includes obtaining a laminate in which a positive electrode layer, a solid electrolyte layer, and a negative electrode layer are arranged in this order. In addition, in order to set the amount of water in the laminate including the positive electrode active material layer, the solid electrolyte layer, and the negative electrode active material layer to the amount specified in the present invention, in the manufacturing of the secondary battery according to the embodiment of the present invention, it is preferable to include a step of drying the laminate including the positive electrode active material layer, the solid electrolyte layer, and the negative electrode active material layer. The drying step may be performed at any stage after the formation of the laminate. In order to more reliably set the water amount specified in the present invention, it is preferable to performing the drying treatment on the laminate in which the positive electrode layer, the solid electrolyte layer, and the negative electrode layer are arranged in this order at least a state in which the laminate is disposed in a battery cell. The drying method is not particularly limited, and for example, the moisture content of the laminate consisting of the positive electrode active material layer, the solid electrolyte layer, and the negative electrode active material layer can be reduced to the range specified in the present invention by using a desiccator, subjecting the laminate to vacuum drying (preferably, freeze vacuum drying), or subjecting the laminate to a heating treatment.

The secondary battery according to the embodiment of the present invention is preferably obtained by sealing the above-described laminate in which the positive electrode layer, the solid electrolyte layer, and the negative electrode layer are arranged in this order. By the sealing, it is possible to more reliably prevent the mixing of moisture into the solid electrolyte layer after the above-described drying step, and thus it is possible to further improve the cycle characteristics. The sealing method is not particularly limited as long as the mixing of moisture (atmosphere) can be completely blocked or suppressed. Examples thereof include a method of sealing the above-described laminate in which the positive electrode layer, the solid electrolyte layer, and the negative electrode layer are arranged in this order by closing a lid of a housing (battery cell) storing the laminate using a gasket such as an O-ring.

In addition, a method of forming the laminate in which the positive electrode layer, the solid electrolyte layer, and the negative electrode layer are arranged in this order is not particularly limited. For example, a composition (slurry) for forming a positive electrode containing a positive electrode active material is applied onto a metal foil which is a positive electrode collector to form a positive electrode active material layer, a dispersion liquid (slurry) for forming a solid electrolyte layer containing a solid electrolyte is applied onto the positive electrode active material layer to form a solid electrolyte layer, a composition (slurry) for forming a negative electrode containing a negative electrode active material is applied onto the solid electrolyte layer to form a negative electrode active material layer, and a negative electrode collector (metal foil) is laminated on the negative electrode active material layer. The entire laminate is optionally dried and subjected to a pressurization treatment to obtain the all-solid-state lithium ion secondary battery as shown in Fig. 1.

In addition, the all-solid-state lithium ion secondary battery can also be manufactured by reversing the method of forming each layer, which includes forming the negative electrode active material layer, the solid electrolyte layer, and the positive electrode active material layer on the negative electrode collector, and optionally subjecting the entire laminate to a pressurization treatment.

As another method, the all-solid-state lithium ion secondary battery can also be manufactured by separately producing the positive electrode active material layer, the solid electrolyte layer, and the negative electrode active material layer, laminating these layers, and optionally drying and pressurizing the laminate.

In this case, in the formation of each layer, a support such as a nonwoven fabric may be disposed as necessary, and each layer can be made into a self-supporting film.

The secondary battery according to the embodiment of the present invention is not limited to the above-described methods as long as the secondary battery specified in the present invention can be obtained.

In the manufacturing of the secondary battery according to the embodiment of the present invention, it is possible to form a layer in which the interface resistance between the solid particles or between the layers is suppressed by the action of the above-described oxide-based solid electrolyte (I) capable of being easily plastically deformed with pressure, even in a case where the sulfide-based solid electrolyte is not used as the solid electrolyte.

The solid electrolyte (I) itself is soft and plastically deformed to act as a binder, which contributes to the improvement of bonding property between the solid particles or between the layers, so that it is also possible to form a layer without using a binder such as an organic polymer.

It is preferable that the secondary battery according to the embodiment of the present invention is initialized after manufacturing or before use. The initialization method is not particularly limited, and it is possible to initialize the secondary battery by, for example, performing initial charging and discharging in a state in which a pressing pressure is increased and then releasing the pressure until the pressure falls within the range of the pressure condition at the time of using the secondary battery.

<Applications of all-solid-state lithium ion secondary battery>

The secondary battery according to the embodiment of the present invention can be applied to various applications. The application aspect is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, in a case of being used for consumer applications, examples thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the secondary battery according to the embodiment of the present invention can be used for various military usages and universe usages. In addition, the secondary battery according to the embodiment of the present invention can also be combined with a solar battery.

The present invention will be more specifically described based on Examples, but the present invention is not limited and interpreted to Examples.

Examples

[Reference Example 1]

Using a ball mill (manufactured by FRITSCH, P-7), powdery $Li_2B_4O_7$ crystals (LBO powder) (manufactured by RARE METALLIC Co., Ltd.) were subjected to ball milling under the following conditions, pot: stabilized zirconia (YSZ) (45 mL), pulverization ball: YSZ (average particle diameter: 5 mm, number of balls: 50 balls), rotation speed: 370 revolutions per minute (rpm), amount of LBO powder: 1 g, atmosphere: air, and treatment time of ball milling: 100 hours, thereby obtaining a fined lithium-containing oxide (hereinafter, also referred to as "fine substance of the lithium-containing oxide").

0.05 g (which was 5% by mass with respect to the fine substance of the lithium-containing oxide) of LiFSI (chemical formula: $Li(FSO_2)_2N$) as a lithium salt was added to 1 g of the obtained fine substance of the lithium-containing oxide, and the mixture was further ball-milled for 100 hours. The obtained powder was added to water such that a powder concentration was 42% by mass, and the mixture was subjected to ultrasonic dispersion for 30 minutes. Subsequently, the obtained dispersion liquid was transferred to a glass petri dish, and dried at 120°C for 2 hours in the air to obtain a film of solid electrolyte. Subsequently, the obtained film was peeled off to obtain a powdery solid electrolyte (I)-1.

<Production and evaluation of molded body of solid electrolyte>

The powdery solid electrolyte (I)-1 obtained above was subjected to powder compaction molding at an effective pressure of 220 MPa at 27°C (room temperature) to obtain a molded body (a compacted powder body 1) of the solid electrolyte. A shape of the compacted powder body 1 was a columnar shape having a diameter of 10 mm and a thickness of 0.5 to 1 mm. As a result of measuring ion conductivity of the obtained compacted powder body 1, the ion conductivity of the compacted powder body 1 was $1.5 \times 10^{-4}$ S/cm at 27°C and $4.0 \times 10^{-4}$ S/cm at 60°C.

The above-described ion conductivity of the solid electrolyte (I)-1 was calculated by arranging two electrodes consisting of an In foil to sandwich the compacted powder body 1, measuring an alternating current impedance between both In electrodes in a measurement frequency range of 1 Hz to 1 MHz under conditions of a measurement temperature of 27°C or 60°C and an applied voltage of 50 mV, and then analyzing the arc diameter of the obtained Cole-Cole plot (Nyquist plot).

An X-ray diffraction measurement of the solid electrolyte (I)-1 was performed using a CuK$\alpha$ ray as described above. The measurement conditions were set to 0.01 °/step and 3 °/min. As a result, it was clarified that the above-described X-ray diffraction characteristics were satisfied, and it was found that the solid electrolyte (I)-1 was in an amorphous state.

Using the solid electrolyte (I)-1 obtained above, an X-ray total scattering measurement was performed with SPring-8L04B2 (acceleration voltage: 61.4 keV, wavelength: 0.2019 Å). The sample was sealed in a Capton capillary of 2 mm$\varphi$ or 1 mm$\varphi$, and the experiment was performed. The obtained data were subjected to Fourier transform as described above to obtain a reduced pair distribution function.

As a result of the analysis, in the reduced pair distribution function G(r) obtained from the X-ray total scattering measurement, it was confirmed that, in a range where r was 1 to 5 Å, a first peak in which G(r) of the peak top was more than 1.0 and the peak top was located at 1.43 Å and a second peak in which G(r) of the peak top was more than 1.0 and the peak top was located at 2.40 Å were observed.

On the other hand, in the solid electrolyte (I)-1, the peak attributed to the B-O interatomic distance and the B-B interatomic distance, observed in the general lithium tetraborate crystal, was maintained. The general lithium tetraborate crystal has a structure (diborate structure) in which a $BO_4$ tetrahedron and a $BO_3$ triangle are present at a ratio of 1:1, and it is presumed that this structure is maintained in the solid electrolyte (I)-1.

A proportion {(Full-width 2 at half maximum/Full-width 1 at half maximum) $\times$ 100} of a full-width at half maximum (full-width 2 at half maximum) of a peak in which a chemical shift appeared in a range of -100 to +100 ppm in a spectrum obtained in a case where the solid $^7$Li-NMR measurement of the solid electrolyte (I) obtained above was performed at 120°C with respect to a full-width at half maximum (full-width 1 at half maximum) of a peak in which a chemical shift appeared in a range of -100 to +100 ppm in a spectrum obtained in a case where the solid $^7$Li-NMR measurement of the solid electrolyte (I) obtained above was performed at 20°C was 33%.

In addition, in a case where the first peak appearing in a range of -100 to +100 ppm in the spectrum obtained in a case where the solid $^7$Li-NMR measurement was performed at 20°C was waveform-separated, a second peak having a full-width at half maximum of 5 ppm or less appeared in a range with a chemical shift of -3 to 3 ppm, and a proportion of an area intensity of the second peak to an area intensity of the first peak was 4%.

Using the solid electrolyte (I)-1 obtained above, an infrared absorption spectrum measurement was performed under the conditions described above, and as a result, in the obtained infrared absorption spectrum, a value of a ratio of a maximum absorption intensity in a wave number range of 3,000 to 3,500 cm$^{-1}$ to a maximum absorption intensity in a wave number range of 800 to 1,600 cm$^{-1}$ was 0.72.

In the Raman spectrum of the solid electrolyte (I)-1 obtained above, the coefficient of determination obtained by performing linear regression analysis according to a least-squares method in a wave number range of 600 to 850 cm$^{-1}$ was 0.9974.

The mass reduction rate of the solid electrolyte (I)-1 in a case of being heated from 25°C to 800°C as described above was 29.8%.

Regarding the analysis of each of elements in the obtained solid electrolyte (I)-1, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the powder. The results are shown in the tables below.

[Reference Example 2]

1 g of the fine substance of the lithium-containing oxide used in Reference Example 1 was added to water such that a concentration of the fine substance was 42% by mass, and the mixture was subjected to ultrasonic dispersion for 30 minutes. 0.05 g (which was 5% by mass with respect to the fine substance of the lithium-containing oxide) of LiFSI (chemical formula: Li(FSO$_2$)$_2$N) as a lithium salt was added to the obtained dispersion liquid, and the mixture was further subjected to ultrasonic dispersion for 30 minutes.

The obtained dispersion liquid was transferred to a glass petri dish, and dried at 120°C for 2 hours in the air to obtain a film of solid electrolyte. Subsequently, the obtained film was peeled off to obtain a powdery solid electrolyte (I)-2. Various evaluations were performed on the solid electrolyte (I)-2 in the air in the same manner as in Reference Example 1. The results are summarized in the tables below.

[Reference Example 3]

Using a ball mill (manufactured by FRITSCH, P-7), powdery $Li_2B_4O_7$ (LBO powder) (manufactured by RARE METALLIC Co., Ltd.) was subjected to ball milling under the following conditions, pot: YSZ (45 mL), pulverization ball: YSZ (average particle diameter: 5 mm, weight: 70 g), rotation speed: 530 revolutions per minute (rpm), amount of LBO powder: 4.2 g, atmosphere: air, and treatment time of ball milling: 100 hours, thereby obtaining a fine substance of a lithium-containing oxide.

The obtained fine substance of the lithium-containing oxide was added to water such that a concentration of the fine substance was 42% by mass, and the mixture was subjected to ultrasonic dispersion for 60 minutes to obtain a dispersion liquid 1.

Next, 3.25 g of LiFSI (chemical formula: $Li(FSO_2)_2N$) as a lithium salt was added to water such that a concentration was 87% by mass, and the mixture subjected to an ultrasonic treatment for 60 minutes to obtain a solution 2.

The obtained dispersion liquid 1 and solution 2 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-3. The obtained powder was allowed to stand in the air for a certain period of time, and various evaluations were performed in the air in the same manner as in Reference Example 1 using the solid electrolyte (I)-3. The results are summarized in the tables below.

[Reference Example 4]

A dispersion liquid 3 was obtained in the same manner as in the preparation of the dispersion liquid 1 in Reference Example 3.

Next, 2.32 g of LiFSI (chemical formula: $Li(FSO_2)_2N$) as a lithium salt was added to water such that a concentration was 87% by mass, and the mixture subjected to an ultrasonic treatment for 60 minutes to obtain a solution 4.

The obtained dispersion liquid 3 and solution 4 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-4. The obtained powder was allowed to stand in the air for a certain period of time, and various evaluations were performed in the air in the same manner as in Reference Example 1 using the solid electrolyte (I)-4. The results are summarized in the tables below.

[Reference Example 5]

A dispersion liquid 5 was obtained in the same manner as in the preparation of the dispersion liquid 1 in Reference Example 3.

Next, 4.65 g of LiFSI (chemical formula: $Li(FSO_2)_2N$) as a lithium salt was added to water such that a concentration was 87% by mass, and the mixture subjected to an ultrasonic treatment for 60 minutes to obtain a solution 6.

The obtained dispersion liquid 5 and solution 6 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-5. Various evaluations were performed in the air in the same manner as in Reference Example 1 using the obtained powder as soon as possible. The results are summarized in the tables below.

[Reference Example 6]

A dispersion liquid 7 was obtained in the same manner as in the preparation of the dispersion liquid 1 in Reference Example 3.

Next, 7.13 g of LiTFSI (chemical formula: $Li(F_3CSO_2)_2N$) as a lithium salt was added to water such that a concentration was 87% by mass, and the mixture subjected to an ultrasonic treatment for 60 minutes to obtain a solution 8.

The obtained dispersion liquid 7 and solution 8 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-6. The obtained powder was allowed to stand in the air for a certain period of time, and various evaluations were performed in the air in the same manner as in Reference Example 1 using the solid electrolyte (I)-6. The results are summarized in the tables below.

In Reference Example 6, the carbon amount shown in Table 1 below was estimated from the analytical mass of sulfur in consideration of the amount of each of atoms in the lithium salt.

[Comparative Reference Example 1]

As a result of performing the element analysis on the LBO powder used in Reference Example 1 (powdery $Li_2B_4O_7$ crystals not subjected to the ball milling), the composition of the obtained LBO powder was $Li_{1.96}B_{4.00}O_{6.80}$. The LBO powder was subjected to powder compaction molding at an effective pressure of 220 MPa at room temperature (27°C) to obtain a compacted powder body C1 for comparison. The ion conductivity of the obtained compacted powder body C1 could not be detected.

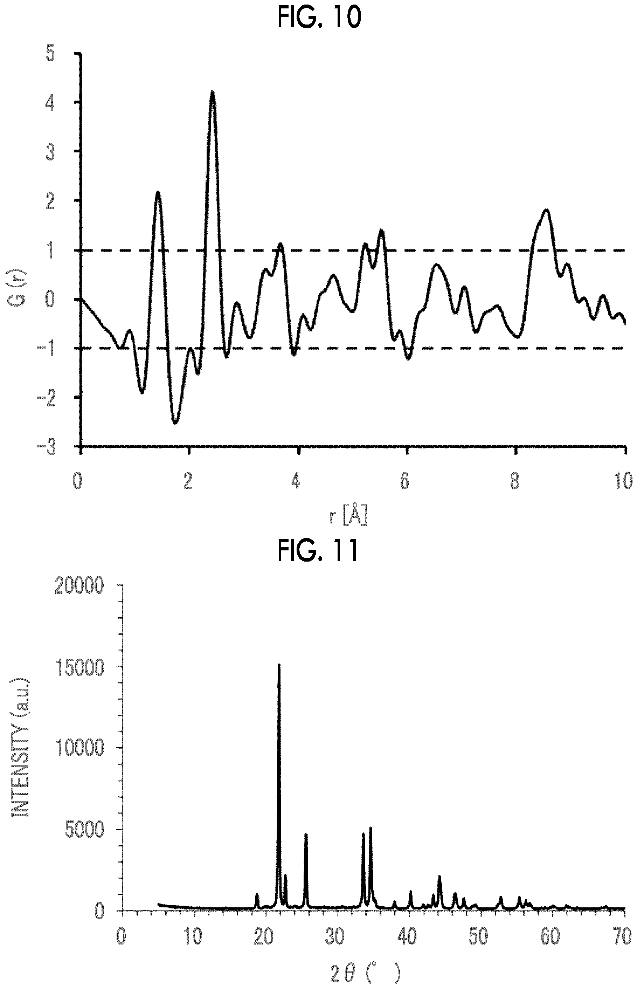

In addition, in the same manner as in Reference Example 1, the X-ray total scattering measurement was performed using the LBO powder to obtain a reduced pair distribution function G(r). Fig. 10 shows the reduced pair distribution function G(r) obtained from the LBO powder.

As a result of analysis, in the reduced pair distribution function G(r) of the LBO powder obtained from the X-ray total scattering measurement, a first peak (corresponding to the B-O proximity) in which a peak top was located at 1.40 Å and a second peak (corresponding to the BB proximity) in which a peak top was located at 2.40 Å were present, and G(r) of the peak top of the first peak and G(r) of the peak top of the second peak were 1.0 or more (see Fig. 10). In addition, other peaks in which peak tops were located at 3.65 Å, 5.22 Å, 5.51 Å, and 8.54 Å were present, and the absolute value of G(r) of the peak top of each of the peaks was clearly more than 1.0 (see Fig. 10).

In addition, the LBO powder was subjected to the X-ray diffraction measurement as described above. The measurement conditions were set to 0.01 °/step and 3 °/min. Fig. 11 shows an X-ray diffraction pattern of the LBO powder of Comparative Reference Example 1. As shown in Fig. 11, a plurality of peaks having a small width were observed in the LBO powder used in Comparative Reference Example 1. More specifically, the strongest peak corresponding to (1,1,2) plane was observed at a position of 21.78° in terms of the $2\theta$ value. Other major diffraction peaks observed were a peak corresponding to (2,0,2) plane at a position of 25.54°, a peak corresponding to (2,1,3) plane at a position of 33.58°, and a peak corresponding to (3,1,2) plane at a position of 34.62°; and intensities of these three peaks were substantially the same. These peaks were derived from the crystalline component.

[Comparative Reference Example 2]

As a result of the element analysis of the fine substance of the lithium-containing oxide (powdery $Li_2B_4O_7$ crystals subjected to ball milling) prepared in Reference Example 1, the composition of the fine substance of the lithium-containing oxide was $Li_{1.94}B_{4.00}O_{6.80}$.

Next, the above-described fine substance of the lithium-containing oxide was subjected to powder compaction molding at an effective pressure of 220 MPa at 27°C (room temperature) to obtain a compacted powder body (compact powder body R1) for comparison. The ion conductivity of the obtained compacted powder body R1 was $7.5 \times 10^{-9}$ S/cm at 27°C and $7.5 \times 10^{-8}$ S/cm at 60°C.

In the column of "Short distance G(r)" of the tables below, with regard to the reduced pair distribution function G(r) of the solid electrolyte (I) obtained from an X-ray total scattering measurement as described above, a case where a first peak in which a peak top was located in a range where r is $1.43 \pm 0.2$ Å and a second peak in which a peak top was located in a range where r is $2.40 \pm 0.2$ Å were present, and both G(r) of the peak top of the first peak and G(r) of the peak top of the second peak were more than 1.0 is indicated by "A", and other cases are indicated by "B".

In Reference Examples 1 to 4 shown in the tables below and Reference Examples 9 to 12 described later, the value of G(r) of the peak top of the first peak was 1.2 or more.

In addition, in the column of "Long distance G(r)", with regard to the above-described reduced pair distribution function G(r), a case where the absolute value of G(r) was less than 1.0 in a range where r was more than 5 Å and 10 Å or less is indicated by "A", and a case where the absolute value of G(r) was not less than 1.0 is indicated by "B".

In addition, as a result of the above-described X-ray diffraction characteristics using a $CuK\alpha$ ray, a case where the above-described X-ray diffraction characteristics were satisfied was indicated by "A", and a case where the above-described X-ray diffraction characteristics were not satisfied was indicated by "B". In Reference Examples 1 to 6 shown in the tables below and Reference Examples 7 to 13 described later, in the X-ray diffraction pattern, none of the first peak, the second peak, the third peak, and the fourth peak were present, or the intensity ratio of at least one peak of the first peak, the second peak, the third peak, or the fourth peak was 2.0 or less.

In the tables below, the column of "Element analysis" indicates the molar amount of each element as a relative value in which the content of B was set to "4.00", in the composition of the solid electrolyte (I) obtained in each of Reference Examples and the lithium-containing oxide in each of Comparative Reference Examples.

In the tables below, "Proportion of area intensity" is a proportion of the area intensity of the second peak to the area intensity of the first peak in the above-described solid $^7$Li-NMR measurement, and the evaluation results based on the following standards are described.

<Standard for proportion of area intensity>

A: case where the proportion of the area intensity was 15% or more
B: case where the proportion of the area intensity was 0.5% or more and less than 15%
C: case where the proportion of the area intensity was less than 0.5%

In the tables below, the column of "Maximum absorption intensity ratio" indicates whether or not the above-described infrared absorption spectral characteristics were satisfied; and a case where [Maximum absorption intensity in wave number range of 3000 to 3500 cm$^{-1}$]/[Maximum absorption intensity in wave number range of 800 to 1600 cm$^{-1}$] was 0.20 or more is indicated by A, and a case of being less than 0.20 is indicated by B.

In the tables below, "-" means that the measured value is not obtained.

[Table 1]

|  | Element composition of solid electrolyte | | | | | | |
|---|---|---|---|---|---|---|---|
|  | Li | B | O | F | s | N | C |
| Reference Example 1 | 1.94 | 4.00 | 10.66 | 0.03 | 0.02 | 0.01 | |
| Reference Example 2 | 2.04 | 4.00 | 11.09 | 0.06 | 0.05 | 0.02 | |
| Reference Example 3 | 2.70 | 4.00 | 20.90 | 1.36 | 1.38 | 0.69 | |
| Reference Example 4 | 2.50 | 4.00 | 19.90 | 0.95 | 0.98 | 0.49 | |
| Reference Example 5 | 3.00 | 4.00 | 17.10 | 1.95 | 1.98 | 0.99 | |
| Reference Example 6 | 2.90 | 4.00 | 21.45 | 5.00 | 1.90 | 0.95 | 1.90 |
| Comparative Reference Example 1 | 1.96 | 4.00 | 6.80 | | | | |
| Comparative Reference Example 2 | 1.94 | 4.00 | 6.80 | | | | |

[Table 2]

| | Proportion of full-width at half maximum (%) | Proportion of area intensity | Maximum absorption intensity ratio | Coefficient of determination | Mass reduction rate (%) | Short distance G(r) | Long distance G(r) | X-ray diffraction characteristics | Ion conductivity (S/cm) | |
|---|---|---|---|---|---|---|---|---|---|---|
| | | | | | | | | | 27°C | 60°C |
| Reference Example 1 | 33 | B | A | 0.9974 | 29.8 | A | A | A | $1.5 \times 10^{-4}$ | $4.0 \times 10^{-4}$ |
| Reference Example 2 | - | A | A | 0.9908 | 30 | A | - | A | $1.1 \times 10^{-3}$ | $4.0 \times 10^{-3}$ |
| Reference Example 3 | - | A | A | - | - | A | A | A | $4.7 \times 10^{-3}$ | - |
| Reference Example 4 | - | A | A | - | - | A | - | A | $4.1 \times 10^{-3}$ | - |
| Reference Example 5 | - | A | A | - | - | A | - | A | $3.0 \times 10^{-3}$ | - |
| Reference Example 6 | - | B | A | - | - | - | - | A | $7.4 \times 10^{-4}$ | - |
| Comparative Reference Example 1 | 100 | C | B | 0.1660 | 0.2 | A | B | B | Undetectable | Undetectable |
| Comparative Reference Example 2 | 46 | C | B | 0.9677 | - | A | A | A | $7.5 \times 10^{-9}$ | $7.5 \times 10^{-8}$ |

EP 4 535 488 A1

27

As shown in the above tables, it was found that the solid electrolytes (I)-1, (I)-2, (I)-3, (I)-4, (I)-5, and (I)-6 of Reference Examples 1 to 6 had excellent ion conductivity. In addition, from the results of the element analysis, it was found that the content of Li in the solid electrolyte was higher in Reference Examples 3 to 6. In Reference Examples 3 to 6, the aqueous solution containing the lithium compound subjected to the mechanical milling treatment and the aqueous solution containing the lithium salt were mixed (the method 3 in the step 2B described above), and it is presumed that a larger amount of the lithium salt can be mixed, and as a result, the amount of Li incorporated into the solid electrolyte is increased. In addition, it was also found that the ion conductivity was further improved in Reference Examples 3, 4, and 5, in which LiFSI was used as the lithium salt. This is presumed to be because the increased Li includes Li having high mobility.

<Influence of water in solid electrolyte>

The compacted powder body (pellet) (10 mm$\varphi$, 0.9 mmt) of the solid electrolyte (I)-3 obtained in Reference Example 3 was vacuum-dried at 27°C under a restraint of 60 MPa, and a pressure change and an ion conductivity with respect to a vacuum drying time were examined. The method of producing the compacted powder body and the evaluation of the ion conductivity are as described above, except that the In electrode is changed to the Ti electrode. The results are shown in Table 3.

[Table 3]

| Vacuum drying time (min) | Pressure (Pa) | Ion conductivity (27°C, S/cm) |
|---|---|---|
| 0 | 101325 | $4.8 \times 10^{-3}$ |
| 5 | 200 | $3.8 \times 10^{-3}$ |
| 20 | 20 | $3.3 \times 10^{-3}$ |
| 50 | 10 | $2.6 \times 10^{-3}$ |
| 1080 | 15 | $5.7 \times 10^{-4}$ |

In the solid electrolyte (I)-3 of Reference Example 3, the OH stretching peak increased at 3,000 to 3,500 cm$^{-1}$ in the infrared absorption spectrum, and thus it is considered that a large number of OH groups and water were present. In addition, it is presumed that water was present as free water and bound water. In the above, the pellets were dried under conditions that the pellets were considered to be volatilized from the free water by vacuum drying first, and the pellets were further dried under more severe drying conditions; and the ion conductivity in each stage was evaluated.

As shown in the above table, it is considered that the pressure was 200 Pa and the free water was in a vaporized state in a drying time of 5 minutes, but the ion conductivity was a high value of $3.8 \times 10^{-3}$ S/cm, and even in a drying time of 1,080 minutes and a pressure of 15 Pa, the ion conductivity was $5.7 \times 10^{-4}$ S/cm. This result indicates that bound water other than free water was present and contributed to the ion conductivity.

[Reference Example 7]

A dispersion liquid 9 in which the concentration of the fine substance of the lithium-containing oxide was 42% by mass was obtained in the same manner as in the preparation of the dispersion liquid 1 in Reference Example 3 described above.

Next, 7.12 g of LiTFSI (chemical formula: Li($F_3CSO_2$)$_2$N) as a lithium salt was added to water such that a concentration was 87% by mass, and the mixture subjected to an ultrasonic treatment for 60 minutes to obtain a solution 10.

The obtained dispersion liquid 9 and solution 10 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-7. The obtained powder was allowed to stand in the air for a certain period of time, and various evaluations were performed in the air in the same manner as in Reference Example 1 using the solid electrolyte (I)-7. The results are summarized in the tables below.

[Reference Example 8]

A solid electrolyte (I)-8 was obtained in the same manner as in Reference Example 7, except that the content of water and LiTFSI in the obtained solid electrolyte (I) was changed to the amount shown in the table below; and various evaluations were performed in the air in the same manner as in Reference Example 1. The results are summarized in the tables below.

[Reference Examples 9 to 13]

Solid electrolytes (I)-9 to (I)-13 were obtained in the same manner as in Reference Example 7, except that LiTFSI was changed to LiFSI, and the content of water and LiFSI in the obtained solid electrolyte (I) was changed to the amount shown in the table below; and various evaluations were performed in the air in the same manner as in Reference Example 1. The results are summarized in the tables below. However, in Reference Example 13, the evaluation was performed in the air on the powder obtained by vacuum drying as soon as possible.

In the tables below, the columns of "Fine substance of lithium-containing oxide", "Lithium salt", and "Water" indicate relative molar ratios. For example, in Reference Example 7, the molar ratio of the lithium salt to the fine substance of the lithium-containing oxide was 1, and the molar ratio of the water to the fine substance of the lithium-containing oxide was 11. The above-described molar ratio was calculated by the following method.

Regarding the analysis of each of elements, quantitative analysis was performed by ICP-OES for lithium and boron or by combustion ion chromatography (combustion IC) for fluorine and sulfur, estimation was performed for N from the analytical mass of sulfur in consideration of the amount of each of atoms in the Li salt, the analytical masses of elements other than O were added together for O, and calculation was performed in terms of the difference from the total amount of the solid electrolyte. In Reference Examples 7 and 8, the carbon amount was estimated from the analytical mass of sulfur in consideration of the amount of each of atoms in the lithium salt. The molar ratio of the fine substance of the lithium-containing oxide in the solid electrolyte to the lithium salt was calculated from the molar ratio of an element (for example, B) which is present only in the fine substance of the lithium-containing oxide to an element which is present only in the lithium salt. In addition, the molar ratio of the fine substance of the lithium-containing oxide to the water was calculated by subtracting the molar ratio of O, contained in the fine substance of the lithium-containing oxide and the lithium salt, from the molar ratio of O in the solid electrolyte to calculate the molar amount of O derived from water, and using the obtained molar amount of O derived from water and the molar amount of the fine substance of the lithium-containing oxide.

[Table 4]

|  | Fine substance of the lithium-containing oxide | Lithium salt | Water |
|---|---|---|---|
| Comparative Reference Example 2 | 1 | 0 | 0 |
| Reference Example 7 | 1 | 1 | 11 |
| Reference Example 8 | 1 | 1.2 | 11 |
| Reference Example 9 | 1 | 0.01 | 4 |
| Reference Example 10 | 1 | 0.03 | 4 |
| Reference Example 11 | 1 | 0.5 | 11 |
| Reference Example 12 | 1 | 0.7 | 11 |
| Reference Example 13 | 1 | 1.0 | 6 |

In addition, the content (% by mass) of each component in the solid electrolyte (I) was calculated based on the molar amount and the molecular weight shown in Table 4. The results are shown in Table A.

[Table A]

|  | Fine substance of the lithium-containing oxide | Lithium salt | Water |
|---|---|---|---|
| Comparative Reference Example 2 | 100 | 0 | 0 |
| Reference Example 7 | 26 | 44 | 30 |
| Reference Example 8 | 24 | 48 | 28 |
| Reference Example 9 | 70 | 1 | 29 |
| Reference Example 10 | 69 | 2 | 29 |
| Reference Example 11 | 37 | 20 | 43 |
| Reference Example 12 | 34 | 26 | 40 |
| Reference Example 13 | 36 | 40 | 24 |

[Table 5]

| | Proportion of full-width at half maximum (%) | Proportion of area intensity | Maximum absorption intensity ratio | Coefficient of determination | Mass reduction rate (%) | Short distance G(r) | Long distance G(r) | X-ray diffraction characteristics | Ion conductivity (S/cm) | |
|---|---|---|---|---|---|---|---|---|---|---|
| | | | | | | | | | 27°C | 60°C |
| Comparative Reference Example 2 | 46 | C | B | 0.9677 | - | A | A | A | $7.5 \times 10^{-9}$ | $7.5 \times 10^{-8}$ |
| Reference Example 7 | - | B | A | - | - | - | - | A | $7.4 \times 10^{-4}$ | - |
| Reference Example 8 | - | B | A | - | - | - | - | A | $7.2 \times 10^{-4}$ | - |
| Reference Example 9 | 33 | B | A | 0.9974 | 29.8 | A | - | A | $1.5 \times 10^{-4}$ | $4.0 \times 10^{-4}$ |
| Reference Example 10 | - | A | A | 0.9908 | 30 | A | - | A | $1.1 \times 10^{-3}$ | $4.0 \times 10^{-3}$ |
| Reference Example 11 | - | A | A | - | - | A | - | A | $4.1 \times 10^{-3}$ | - |
| Reference Example 12 | - | A | A | - | - | A | - | A | $4.7 \times 10^{-3}$ | - |
| Reference Example 13 | - | A | A | - | - | A | - | A | $3.0 \times 10^{-3}$ | - |

As shown in the above tables, the solid electrolyte of each of Reference Examples had desired characteristics or physical properties, and exhibited excellent ion conductivity.

[Production Example 1] Production of all-solid-state lithium ion secondary battery

<Preparation of fine substance of lithium-containing oxide>

45 g of powdery $Li_2B_4O_7$ crystals (LBO powder) (manufactured by RARE METALLIC Co., Ltd.), 770 g of zirconia beads, and 3 mL of water were charged into a 500 mL zirconia pot, and the pot was sealed with a Teflon ring and a lid made of zirconia. The LBO powder was pulverized in a planetary ball milling device at 300 rpm for 45 hours to obtain a fine substance of a lithium-containing oxide.

<Preparation of solid electrolyte slurry>

10 g of the above-described fine substance of the lithium-containing oxide, 15 g of water, and 11 g of LiFSI were mixed in a beaker, and subjected to an ultrasonic treatment for 30 minutes using an ultrasonic cleaner to obtain a dispersion liquid. The dispersion liquid was further stirred with a magnetic stirrer for 30 minutes to obtain a solid electrolyte slurry 1.

The solid electrolyte slurry 1 was vacuum-dried at 40°C and 20 Pa for 15 hours to obtain a powder. After storing the obtained powder in a desiccator (5%) for several days and then analyzing in the air, it was confirmed that the powder had the above-described X-ray diffraction characteristics and was in an amorphous state. In addition, in a case where the ion conductivity was measured by the above-described method, the ion conductivity was $4.5 \times 10^{-3}$ S/cm. In addition, the value of the ratio of the content of LiFSI to the content of the lithium-containing oxide was 1 in terms of a molar ratio; and the value of the ratio of the content of water to the content of the lithium-containing oxide was 9 in terms of a molar ratio. The element composition (molar ratio) was approximately as follows. Li:B:O:F:S:N = 3:4:20:2:2:1

<Preparation of positive electrode slurry>

5.0 g of a positive electrode active material $LiCoO_2$ and 4.8 g of a 6% by mass aqueous dispersion liquid of carbon nanotubes (CNT) (manufactured by KJ Special Paper Co., Ltd.) as a conductive auxiliary agent were added to 5.2 g of the above-described solid electrolyte slurry 1, and the mixture was stirred with a magnetic stirrer for 30 minutes to obtain a positive electrode slurry 1.

<Preparation of negative electrode slurry>

5.0 g of a negative electrode active material $TiNb_2O_7$ and 9.8 g of a 6% by mass aqueous dispersion liquid of carbon nanotubes (CNT) (manufactured by KJ Special Paper Co., Ltd.) as a conductive auxiliary agent were added to 7.6 g of the above-described solid electrolyte slurry 1, and the mixture was stirred with a magnetic stirrer for 30 minutes to obtain a negative electrode slurry 1.

<Preparation of positive electrode-side laminate [solid electrolyte layer/positive electrode active material layer/Al collector]>

The above-described positive electrode slurry 1 was applied onto an A4-sized Al foil having a thickness of 50 $\mu$m using a desktop coating machine at an applicator gap of 100 $\mu$m and an application speed of 30 mm/s. After being left to stand at room temperature for 1 hour, the above-described solid electrolyte slurry 1 was applied onto a positive electrode slurry coating film in a multilayer manner using a desktop coating machine at an applicator gap of 200 $\mu$m and a coating rate of 90 mm/s. The multilayer coating film was stored in a desiccator having a relative humidity of 5% or less for 12 hours and dried, and punched with a hand punch to have a diameter of 10 mm, thereby obtaining a positive electrode-side laminate (solid electrolyte layer/positive electrode active material layer/Al collector). A thickness of the solid electrolyte layer was approximately 60 $\mu$m.

<Preparation of negative electrode-side laminate [solid electrolyte layer/negative electrode active material layer/Al collector]>

The above-described negative electrode slurry 1 was applied onto an A4-sized Al foil having a thickness of 50 $\mu$m using a desktop coating machine at an applicator gap of 200 $\mu$m and an application speed of 30 mm/s. After being left to stand at room temperature for 1 hour, the above-described solid electrolyte slurry 1 was applied onto a negative electrode slurry coating film in a multilayer manner using a desktop coating machine at an applicator gap of 300 $\mu$m and a coating rate of 90 mm/s. The multilayer coating film was stored in a desiccator having a relative humidity of 5% or less for 12 hours and dried, and punched with a hand punch to have a diameter of 10 mm, thereby obtaining a negative electrode-side laminate (solid electrolyte layer/negative electrode active material layer/Al collector). A thickness of the solid electrolyte layer was approximately 60 $\mu$m.

<Production of all-solid-state lithium ion secondary battery>

(Example 1)

The above-described negative electrode-side laminate was placed on a 10 mm diameter SUS (stainless steel) base of an all-solid state battery evaluation cell (KP-SolidCell, manufactured by Hohsen Corp.) with the solid electrolyte layer side facing upward. The above-described positive electrode-side laminate was placed on the solid electrolyte layer with the solid electrolyte layer side facing downward. In this way, a laminate having a structure of positive electrode-side laminate/negative electrode-side laminate (this laminate is referred to as a cell) was obtained.

Next, a Teflon tube having an inner diameter of 10.2 mm was fitted from the positive electrode collector side of the cell, and a polished Ti plate having a diameter of 10 mm and a thickness of 2 mm was inserted from a hole in the upper part of the Teflon tube to superimpose the polished Ti plate on the positive electrode laminate. Furthermore, a Ti rod having a diameter of 10 mm and a height of 2 cm was placed on the polished Ti plate.

Next, the upper housing of the KP-SolidCell was fitted and sealed using a double O-ring, a 4-point bolt, and a butterfly nut. The cell was restrained from above and below by a restraining pressure applying mechanism provided on the upper part of the KP-SolidCell at a torque of 5 Nm (corresponding to 30 MPa).

Next, the KP-SolidCell was opened to take out the cell, the excess liquid component which had bleed out due to the application of the restraining pressure was wiped off. Next, the cell was set in the KP-SolidCell, and restrained from above and below in the same manner as described above.

Next, the upper lid was opened, and the entire KP-SolidCell was subjected to a freeze-drying treatment (10 Pa, 40°C) for 2 hours to sufficiently remove moisture inside the cell. After taking out the KP-SolidCell from the vacuum dryer, the upper lid was closed and sealed through a double O-ring. After being left to stand for 40 hours, the battery was obtained as Example 1.

(Examples 2 to 4 and Comparative Example 1)

A battery was obtained in the same manner as in Example 1, except that, in the production of the battery of Example 1, the amount (number of particles) of silica gel (manufactured by FUJIFILM Wako Pure Chemical Corporation, medium particle size (blue)) disposed in the cavity of the KP-SolidCell after placing the Ti rod on the polished Ti plate was set as shown in the tables below, and the vacuum drying time in the freeze-drying treatment was set as shown in the tables below.

The cycle characteristics of the obtained battery (amount of positive electrode active material: 2 mg/cm$^2$, restraining pressure: 30 MPa) at 25°C were evaluated as described in the following test example.

[Test Example] Cycle characteristic test

The battery obtained as described above was applied to a restraining pressure (30 MPa), and under a temperature condition of 27°C, charging and discharging were repeatedly performed under the following conditions using 580-NOHFR manufactured by TOYO TECHNIKA CO., LTD.

The charging was performed at a constant current value $I_\beta$ until the battery voltage reached 2.8 V, and after reaching 2.8 V, the voltage was made constant (2.8 V) and the charging was performed until the current value reached 2.4 C-rate.

After the charging, the circuit was opened and left to stand for 10 minutes, and then the battery was discharged at a constant current value $I_\beta$ until the battery voltage reached 1.5 V.

The charging and discharging up to this point were defined as one cycle.

After the discharging, the circuit was opened and left to stand for 10 minutes and then next charging was performed, and the charging and discharging were repeated under the same conditions.

In the above-described charging and discharging, the current value $I_\beta$ was set to 0.2 C in the first cycle of charging and discharging as initialization of the battery, and was set to 3 C in subsequent charging and discharging, and a charging and discharging cycle test was performed.

The results are shown in the table below. In the table below, "Moisture content in KF measurement" in Example 1 and Comparative Example 1 is the moisture content (% by mass) of the laminate consisting of the positive electrode active material layer, the solid electrolyte layer, and the negative electrode active material layer, and was determined as follows.

The obtained battery was disassembled in an Ar atmosphere to take out a cell, and approximately 5 to 10 mg of a laminate portion consisting of the positive electrode active material layer, the solid electrolyte layer, and the negative electrode active material layer was sealed in a special vial bottle as a sample. **In** addition, only the Ar atmosphere was sealed in a special vial bottle as a blank.

The vial bottle was set in a Karl Fischer moisture vaporization device, heated to a temperature of 100°C or 300°C to vaporize moisture, and then a moisture content of each sample was measured by a Karl Fischer titration method using an electrochemical titration-type moisture content analyzer. A moisture content of the blank was subtracted from the moisture content, and the obtained value was divided by the amount of the sample to obtain the moisture content (% by mass) of the laminate consisting of the positive electrode active material layer, the solid electrolyte layer, and the negative electrode active material layer.

[Table 6]

| | | Drying conditions | | (A) Moisture content at 100°C in Karl Fischer titration method (% by mass) | (B) Moisture content at 300°C in Karl Fischer titration method (% by mass) | (B) - (A) (% by mass) | Cycle characteristics | |
|---|---|---|---|---|---|---|---|---|
| | | Amount of silica gel (number of particles) | Vacuum drying time (hour) | | | | Discharge capacity at 10 cycles (mAh/g) | Discharge capacity retention rate at 200 cycles (%) |
| | Example 1 | - | 15 | 1.0 | 2.0 | 1.0 | 120 | 90 |
| | Example 2 | - | 2 | - | - | - | 125 | 60 |
| | Example 3 | 20 | 2 | - | - | - | 120 | 70 |
| | Example 4 | 20 | - | - | - | - | 125 | 60 |
| | Comparative Example 1 | - | - | 10.0 | 15.5 | 5.5 | 30 | 0 |

As shown in the above table, it was found that the charging and discharging cycle characteristics were effectively improved by subjecting the laminate consisting of the positive electrode active material layer, the solid electrolyte layer, and the negative electrode active material layer, which constituted the battery, to a vacuum drying treatment to suppress the moisture content.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2022-089965 filed in Japan on June 1, 2022, the contents of which are incorporated herein by reference, as a part of the description of the present specification.

Explanation of References

    1: negative electrode collector
    2: negative electrode active material layer
    3: solid electrolyte layer
    4: positive electrode active material layer
    5: positive electrode collector
    6: operation portion
    10: all-solid-state lithium ion secondary battery

**Claims**

1.   An all-solid-state lithium ion secondary battery comprising, in the following order:

a positive electrode layer;
a solid electrolyte layer; and
a negative electrode layer,
wherein the solid electrolyte layer contains an amorphous solid electrolyte which contains a lithium-containing oxide containing Li, B, and O and a lithium salt, and in the amorphous solid electrolyte, a value of a ratio of a content of the lithium salt to a content of the lithium-containing oxide is 0.001 to 1.5 in terms of a molar ratio, and in a laminate consisting of a positive electrode active material layer, the solid electrolyte layer, and a negative electrode active material layer, a moisture content at 100°C based on a Karl Fischer titration method is 7.0% by mass or less, and a difference in moisture content between at 100°C and at 300°C based on the Karl Fischer titration method is 0.1% to 5.0% by mass.

2. An all-solid-state lithium ion secondary battery comprising, in the following order:

a positive electrode layer;
a solid electrolyte layer; and
a negative electrode layer,
wherein the solid electrolyte layer contains an amorphous solid electrolyte which contains a lithium-containing oxide containing Li, B, and O and a lithium salt, and in the amorphous solid electrolyte, a value of a ratio of a content of the lithium salt to a content of the lithium-containing oxide is 0.001 to 1.5 in terms of a molar ratio, and a laminate consisting of a positive electrode active material layer, the solid electrolyte layer, and a negative electrode active material layer is a laminate subjected to a vacuum drying treatment.

3. The all-solid-state lithium ion secondary battery according to claim 1 or 2,

wherein the lithium-containing oxide includes $Li_{2+x}B_{4+y}O_{7+z}$,
where $-0.3 < x < 0.3$, $-0.3 < y < 0.3$, and $-0.3 < z < 0.3$.

4. The all-solid-state lithium ion secondary battery according to any one of claims 1 to 3,

wherein the lithium salt is represented by Formula (1),

$$Formula\ (1) \qquad LiN(R_{f1}SO_2)(R_{f2}SO_2)$$

in the formula, $R_{f1}$ and $R_{f2}$ each independently represent a halogen atom or a perfluoroalkyl group.

5. The all-solid-state lithium ion secondary battery according to any one of claims 1 to 4,
wherein the lithium-containing oxide is a lithium-containing oxide subjected to a mechanical milling treatment.

6. The all-solid-state lithium ion secondary battery according to any one of claims 1 to 5,
wherein the all-solid-state lithium ion secondary battery is obtained by sealing a laminate in which the positive electrode layer, the solid electrolyte layer, and the negative electrode layer are arranged in this order.

7. A manufacturing method of the all-solid-state lithium ion secondary battery according to any one of claims 1 to 6, comprising:

forming a laminate including the positive electrode active material layer, the solid electrolyte layer, and the negative electrode active material layer; and
subjecting the laminate to a vacuum drying treatment.

## FIG. 1

## FIG. 2

## FIG. 3

## FIG. 4

## FIG. 5

100    50    0    −50    −100

100    50    0    −50    −100

## FIG. 6

100    50    0    −50    −100

## FIG. 7

100    50    0    −50    −100

## FIG. 8

RAMAN
INTENSITY

$R^2 = 0.9952$

RAMAN SHIFT $(cm^{-1})$

## FIG. 9

RAMAN INTENSITY

RAMAN SHIFT $(cm^{-1})$

# FIG. 10

# FIG. 11

## INTERNATIONAL SEARCH REPORT

| International application No. |
| --- |
| **PCT/JP2023/020288** |

**A. CLASSIFICATION OF SUBJECT MATTER**

*H01M 10/0562*(2010.01)i; *H01M 10/052*(2010.01)i; *H01M 10/0585*(2010.01)i
FI: H01M10/0562; H01M10/052; H01M10/0585

According to International Patent Classification (IPC) or to both national classification and IPC

**B. FIELDS SEARCHED**

Minimum documentation searched (classification system followed by classification symbols)

H01M10/0562; H01M10/052; H01M10/0585

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/193204 A1 (FUJIFILM CORPORATION) 30 September 2021 (2021-09-30) paragraphs [0025]-[0040], [0056], [0068]-[0069], [0081]-[0130], examples, claims | 2-6 |
| Y | | 1, 3-7 |
| Y | JP 2021-044106 A (TOYOTA MOTOR CORP) 18 March 2021 (2021-03-18) claims, paragraph [0024] | 1, 3-7 |
| Y | JP 2011-054439 A (NIPPON ZEON CO LTD) 17 March 2011 (2011-03-17) claims, paragraphs [0066], [0086], [0090] | 7 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 August 2023** | **22 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/020288**

| Patent document cited in search report | | | Publication date (day/month/year) | Patent family member(s) | Publication date (day/month/year) |
|---|---|---|---|---|---|
| WO | 2021/193204 | A1 | 30 September 2021 | US 2023/0018477 A1 paragraphs [0086]-[0100], [0136], [0165]-[0175], [0208]-[0358], examples, claims CN 115335923 A | |
| JP | 2021-044106 | A | 18 March 2021 | (Family: none) | |
| JP | 2011-054439 | A | 17 March 2011 | (Family: none) | |

Form PCT/ISA/210 (patent family annex) (January 2015)

**REFERENCES CITED IN THE DESCRIPTION**

**Patent documents cited in the description**

- JP 2018052755 A
- WO 2021193204 A
- JP 62022066 A
- JP 2006856 A
- JP H2006856 A
- JP 3045473 A
- JP H3045473 A
- JP 5090844 A
- JP H5090844 A
- JP 6004516 A
- JP H6004516 A
- JP 2022089965 A